# EUROPEAN PATENT APPLICATION

(11) **EP 4 727 207 A2**
(43) Date of publication of application: **15.04.2026**
(21) Application number: 26161308.7
(22) Date of filing: 20.01.2023
(51) Int. Cl.: H04W 24/10

(54) **ENHANCED EMR FOR SERVICE AWARE MEASUREMENTS AND REPORTS**

(62) Divisional of application: 23386002.2
(71) Applicant: Apple Inc., Cupertino, CA 95014 (US)
(72) Inventor: ELDESSOKI, Sameh M, Cupertino, 95014 (US); HOFMANN, Christian, Cupertino, 95014 (US); BOTSINIS, Panagiotis, Cupertino, 95014 (US); TABET, Tarik, Cupertino, 95014 (US)
(74) Representative: Rooney, John-Paul

(57) **Abstract**

Embodiments disclosed herein include: (1) a network (e.g., a 5G New Radio (NR) network) that is configured to use Early Measurement Report (EMR) results reported from a User Equipment (UE) device to configure or change a Secondary Cell Group (SCG) for the UE; (2) a network configured to use service-specific frequency layer configuration information to configure the EMR feature for a UE; (3) a UE configured to use crowdsourced frequency layer information to autonomously determine the UE's EMR feature; (4) a UE configured to autonomously report Idle mode measurements without waiting for network-initiated messaging; (5) a UE configured to receive a set of Primary Secondary Cells (PSCells) from a network including an active PSCell and one or more deactivated PSCells; and (6) a network configured to use service-specific frequency layer configuration information and a list of potential PSCells to configure the EMR feature for a UE and activate a PSCell.

## Description

### TECHNICAL FIELD

The present application relates to wireless devices and wireless networks, including user devices, terminals, circuits, computer-readable media, and methods for performing enhanced Early Measurement Reports (EMR).

### BACKGROUND

Wireless communication systems are rapidly growing in usage. In recent years, wireless devices such as smart phones and tablet computers have become increasingly sophisticated. In addition to supporting telephone calls, many mobile devices now provide access to the Internet, email, text messaging, and navigation using the global positioning system (GPS) and are capable of operating sophisticated applications that utilize these functionalities. Additionally, there exist numerous different wireless communication technologies and standards. Some examples of wireless communication standards include GSM, UMTS (associated with, for example, WCDMA or TD-SCDMA air interfaces), LTE, LTE Advanced (LTE-A), HSPA, 3GPP2 CDMA2000 (*e.g*., 1xRTT, 1xEV-DO, HRPD, eHRPD), IEEE 802.11 (WLAN or Wi-Fi), and BLUETOOTH^{™}, among others.

The ever-increasing number of features and functionality introduced in wireless communication devices also creates a continuous need for improvement in both wireless communications and in wireless communication devices. To increase coverage and better serve the increasing demand and range of envisioned uses of wireless communication, in addition to the communication standards mentioned above, there are further wireless communication technologies under development, including the fifth generation (5G) standard and New Radio (NR) communication technologies. Accordingly, improvements in the field in support of such development and design are desired.

In particular, Early Measurements Reports (EMR) were introduced by 3GPP in 5G to allow for proactive User Equipment (UE) measurements on network pre-configured frequency layers, e.g., Long-Term Evolution (LTE), Frequency Range 1 (FR1), and/or Frequency Range 2 (FR2). In fact, EMR may be measured by UEs on up to eight overlapping frequency layers (e.g., with inter-Radio Access Technology, or IRAT, frequency layers) or non-overlapping frequency layers.

The network can then use the measurement results provided by the UE (e.g., measurement reports initiated by the network via UE Information Request and received via UE Information Response) to configure the UE with a Secondary Cell Group (SCG), i.e., an active Primary Secondary Cell (PSCell) and/or one or more activated/deactivated Secondary Cells (SCells). This procedure could theoretically reduce the Carrier Aggregation (CA)/dual connectivity (DC) setup delay times significantly (e.g., from more than 500 ms to approximately 50-70 ms). However, the UE being configured with EMR measurements would be required to continue measuring the configured frequency layers while in Idle mode, i.e., in order to have some stored measurement results to report once it transitions to Connected mode.

Measuring this number of configured frequency layers while the UE is in Idle mode (i.e., at least for *measIdleDuration-r16*) may cause the EMR feature to be too power hungry for widespread adoption-especially for FR2 layers, i.e., if FR2 PCells are not even supported, as is common in current UEs. Thus, there is a need to improve the EMR feature to become more power efficient and intelligent in order to lead to its wider adoption by UEs and network operators.

### SUMMARY

In accordance with one or more embodiments, a terminal includes a receiver configured to receive, from a network, configuration information for two or more frequency layers; and a processor configured to: determine, based on the configuration information, at least one frequency layer of the two or more frequency layers to prioritize for Early Measurement Reports (EMR). The terminal may then perform at least one measurement on the determined at least one frequency layer; and report results of the at least one measurement to the network.

In accordance with one or more additional embodiments disclosed herein, a terminal includes a receiver configured to receive, from a server, layer information for two or more frequency layers; and a processor configured to: determine, based on the layer information and one or more characteristics of the terminal, at least one frequency layer of the two or more frequency layers to prioritize for Early Measurement Reports (EMR). The terminal may then perform at least one measurement on the determined at least one frequency layer; and report results of the at least one measurement to a network. In some such embodiments, the results may be reported to the network in response to the terminal receiving an uplink (UL) grant from the network, wherein the results are reported to the network via the received UL grant.

In accordance with one or more additional embodiments disclosed herein, a terminal includes a receiver configured to receive, from a network, configuration information for two or more frequency layers and a first set of candidate Primary Secondary Cells (PSCells); and a processor configured to: determine, based on the configuration information, at least one frequency layer of the two or more frequency layers on which to perform Early Measurement Reports (EMR); perform at least one measurement on the determined at least one frequency layer; report results of the at least one measurement to the network as part of a Random Access (RA) procedure; and add a secondary cell group (SCG) based on information received from the network as part of the RA procedure and in response to the reported results. In some such embodiments, each PSCell in the first set of candidate PSCells is a deactivated PSCell, and the network may then indicate an identity of a PSCell in the first set of candidate PSCells to activate.

In accordance with one or more additional embodiments disclosed herein, a terminal includes a receiver configured to receive, from a network, a first set of candidate Primary Secondary Cells (PSCells), wherein the first set of candidate PSCells comprises an active PSCell and one or more deactivated PSCells; and a processor configured to: perform at least one Layer 3 (L3) measurement on each of the one or more deactivated PSCells; report results of the at least one L3 measurements performed on each of the one or more deactivated PSCells to the network; and receive an indication of a new active PSCell from the network in response to the reported results. In some such embodiments, the processor may be further configured to: perform at least one L3 measurement on the active PSCell, wherein at least one L3 measurements on each of the one or more deactivated PSCells are performed with a lower frequency than the at least one L3 measurement performed on the active PSCell.

The techniques described herein may be implemented in and/or used with a number of different types of devices, including but not limited to cellular phones, wireless devices, tablet computers, wearable computing devices, portable media players, and any of various other computing devices.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF DRAWINGS

A better understanding of the present subject matter may be obtained when the following detailed description of various aspects is considered in conjunction with the following drawings:
Figure 1 illustrates an example wireless communication system, according to some aspects.
Figure 2 illustrates an example block diagram of a UE, according to some aspects.
Figure 3 illustrates an example block diagram of a BS, according to some aspects.
Figure 4 illustrates an example block diagram of wireless communication circuitry, according to some aspects.
Figures 5A-5D are diagrams illustrating examples of a New Radio (NR) network using EMR results reported from a UE to configure or change a Secondary Cell Group (SCG) for the UE, according to some aspects.
Figure 6 is a diagram illustrating an example of a network using service-specific frequency layer configuration information to configure the EMR frequency layers for a UE, according to some aspects.
Figure 7 illustrates examples of enhanced Measurement Idle Carrier information element (IE), according to some aspects.
Figures 8A-8C are diagrams illustrating examples of a UE using crowdsourced frequency layer information to autonomously determine the EMR frequency layers for a UE, according to some aspects.
Figures 9A-9C are diagrams illustrating examples of UE-initiated reporting of Idle mode measurements without waiting for network-initiated messaging, according to some aspects.
Figure 10 is a diagram illustrating an example of a UE receiving a set of PSCells from the network including an active PSCell and one or more deactivated PSCells, according to some aspects.
Figure 11 illustrates examples of enhanced RRC Reconfiguration RRC messages, according to some aspects.
Figures 12A-12C illustrate examples of enhanced RRC Setup Request, RRC Setup, and RRC Setup Complete RRC messages, according to some aspects.
Figure 13 illustrates an example of an RRC Setup message having a list of SCGs, according to some aspects.
Figures 14A-14C are diagrams illustrating an example of a network using service-specific frequency layer configuration information indicating a list of potential PSCells that are configured for EMR measurements by a UE followed by different ways for activating a PSCell, according to some aspects.
Figure 14D illustrates an example of an enhanced Security Mode Command RRC Message, according to some aspects.
Figures 14E-14F are diagrams illustrating examples of a network using MAC CE commands to activate a PSCell for a UE, according to some aspects.
Figure 15 is a flowchart detailing a method of using service-specific frequency layer configuration information to configure EMR frequency layers for a UE to measure, according to some aspects.
Figures 16A-16B are flowcharts detailing methods of using crowdsourced frequency layer information to autonomously determine EMR frequency layers for a UE to measure, according to some aspects.
Figure 17 is a flowchart detailing a method of a network using service-specific frequency layer configuration information and a list of potential PSCells to configure for EMR measurements to a UE, according to some aspects.
Figure 18 is a flowchart detailing a method of a UE receiving a set of PSCells from a network including an active PSCell and one or more deactivated PSCells, according to some aspects.

While the features described herein may be susceptible to various modifications and alternative forms, specific aspects thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

There is a need to study enhancements to energy saving in mobile services and mobile devices. The evolution of the 5G and New Radio (NR) standards need to continuously improve network efficiency and energy savings for user equipment (UE) devices and base station (BS) devices. Improvements are needed in terms of both transmission and reception procedures.

In one or more embodiments described herein, improvements are made to the so-called Early Measurement Report (EMR) process in NR, which lead to more efficient operation and reduced setup delay for Carrier Aggregation (CA) and Dual Connectivity (DC) scenarios. In some such embodiments, improvements are made to these communications processes by providing for finer granularity configuration options by the network and/or the use of richer frequency layer information by UEs, e.g., as received via crowdsourced information/servers and related to UE characteristics, such as anticipated UE location, mobility state, traffic, radio frequency (RF) conditions, and the like.

In some embodiments, the improvements in the BS devices include support for autonomous, i.e., UE-initiated, feedback from UE devices, and the potential for fast PSCell addition. Further, improvements may be made in information exchange/coordination procedures over network interfaces (e.g., in Layer 3 measurement applications).

In some embodiments, improvements are made to the mechanisms by which BS devices may perform dynamic switching of a UE's primary cell, including configuring a UE with a list of potential PSCells (e.g., including deactivated and/or activated PSCells) and activating particular PSCells, e.g., in response to EMR measurement reports received from the UE.

In some embodiments, the term "Special Cell" or "SpCell" may refer to any cell that is either the Primary Cell (PCell) of the Master Cell Group (MCG) or the PSCell of the Secondary Cell Group (SCG), as in case of 5G NR Dual Connectivity (DC). Further, the term "source cell" may refer to the primary cell before the switching, and the term "target cell" may refer to the primary cell after the switching procedure. In some embodiments, with respect to Dual Connectivity, the "Master Cell Group" (MCG) is the term given to the group of serving cells associated with the Master RAN node (comprising of the PCell and optionally one or more SCells), and the term "Secondary Cell Group" (SCG) is the term given to the group of serving cells associated with the Secondary RAN node (also comprising of a PSCell and optionally one or more SCells).

The following is a glossary of additional terms that may be used in this disclosure:
**Memory Medium** - Any of various types of non-transitory memory devices or storage devices. The term "memory medium" is intended to include an installation medium, *(e.g.,* a CD-ROM, floppy disks, or tape device; a computer system memory or random-access memory such as DRAM, DDR RAM, SRAM, EDO RAM, Rambus RAM), a non-volatile memory such as a Flash, magnetic media *(e.g.,* a hard drive, or optical storage; registers, or other similar types of memory elements). The memory medium may include other types of non-transitory memory as well or combinations thereof. In addition, the memory medium may be located in a first computer system in which the programs are executed or may be located in a second different computer system which connects to the first computer system over a network, such as the Internet. In the latter instance, the second computer system may provide program instructions to the first computer for execution. The term "memory medium" may include two or more memory mediums which may reside in different locations (*e.g*., in different computer systems that are connected over a network). The memory medium may store program instructions (*e.g*., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Programmable Hardware Element** - includes various hardware devices comprising multiple programmable function blocks connected via a programmable interconnect. Examples include FPGAs (Field Programmable Gate Arrays), PLDs (Programmable Logic Devices), FPOAs (Field Programmable Object Arrays), and CPLDs (Complex PLDs). The programmable function blocks may range from fine grained (combinatorial logic or look up tables) to coarse grained (arithmetic logic units or processor cores). A programmable hardware element may also be referred to as "reconfigurable logic."

**User Equipment (UE) (also "User Device," "UE Device," or "Terminal")** - any of various types of computer systems or devices that are mobile or portable and that perform wireless communications. Examples of UE devices include mobile telephones or smart phones (*e.g*., iPhone^{™}, Android^{™}-based phones), portable gaming devices (*e.g.*, Nintendo Switch^{™}, Nintendo DS^{™}, PlayStation Vita^{™}, PlayStation Portable^{™}, Gameboy Advance^{™}, iPhone^{™}), laptops, wearable devices (e.g., smart watch, smart glasses), PDAs, portable Internet devices, music players, data storage devices, other handheld devices, in-vehicle infotainment (IVI), in-car entertainment (ICE) devices, an instrument cluster, head-up display (HUD) devices, onboard diagnostic (OBD) devices, dashtop mobile equipment (DME), mobile data terminals (MDTs), Electronic Engine Management System (EEMS), electronic/engine control units (ECUs), electronic/engine control modules (ECMs), embedded systems, microcontrollers, control modules, engine management systems (EMS), networked or "smart" appliances, machine type communications (MTC) devices, machine-to-machine (M2M), internet of things (IoT) devices, and the like. In general, the terms "UE" or "UE device" or "terminal" or "user device" may be broadly defined to encompass any electronic, computing, and/or telecommunications device (or combination of devices) that is easily transported by a user (or vehicle) and capable of wireless communication.

**Wireless Device** - any of various types of computer systems or devices that perform wireless communications. A wireless device may be portable (or mobile) or may be stationary or fixed at a certain location. A UE is an example of a wireless device.

**Communication Device** - any of various types of computer systems or devices that perform communications, where the communications may be wired or wireless. A communication device may be portable (or mobile) or may be stationary or fixed at a certain location. A wireless device is an example of a communication device. A UE is another example of a communication device.

**Base Station** - The terms "base station," "wireless base station," or "wireless station" have the full breadth of their ordinary meaning, and at least includes a wireless communication station installed at a fixed location and used to communicate as part of a wireless telephone system or radio system. For example, if the base station is implemented in the context of LTE, it may alternately be referred to as an 'eNodeB' or 'eNB'. If the base station is implemented in the context of 5G NR, it may alternately be referred to as a 'gNodeB' or 'gNB'. Although certain aspects are described in the context of LTE or 5G NR, references to "eNB," "gNB," "nodeB," "base station," "NB," and the like, may refer to one or more wireless nodes that service a cell to provide a wireless connection between user devices and a wider network generally and that the concepts discussed are not limited to any particular wireless technology. Although certain aspects are described in the context of LTE or 5G NR, references to "eNB," "gNB," "nodeB," "base station," "NB," and the like, are not intended to limit the concepts discussed herein to any particular wireless technology and the concepts discussed may be applied in any wireless system.

**Node** - The term "node," or "wireless node" as used herein, may refer to one more apparatus associated with a cell that provide a wireless connection between user devices and a wired network generally.

**Processing Element (or Processor)** - refers to various elements or combinations of elements that are capable of performing a function in a device, such as a user equipment or a cellular network device. Processing elements may include, for example: processors and associated memory, portions or circuits of individual processor cores, entire processor cores, individual processors, processor arrays, circuits such as an Application Specific Integrated Circuit (ASIC), programmable hardware elements such as a field programmable gate array (FPGA), as well any of various combinations of the above.

**Channel** - a medium used to convey information from a sender (transmitter) to a receiver. It should be noted that since characteristics of the term "channel" may differ according to different wireless protocols, the term "channel" as used herein may be considered as being used in a manner that is consistent with the standard of the type of device with reference to which the term is used. In some standards, channel widths may be variable (*e.g*., depending on device capability, band conditions, and the like). For example, LTE may support scalable channel bandwidths from 1.4 MHz to 20MHz. WLAN channels may be 22MHz wide while Bluetooth channels may be 1Mhz wide. Other protocols and standards may include different definitions of channels. Furthermore, some standards may define and use multiple types of channels (*e.g.*, different channels for uplink or downlink and/or different channels for different uses such as data, control information, and the like).

**Band** - The term "band" has the full breadth of its ordinary meaning, and at least includes a section of spectrum (*e.g*., radio frequency spectrum) in which channels are used or set aside for the same purpose.

**Configured to** - Various components may be described as "configured to" perform a task or tasks. In such contexts, "configured to" is a broad recitation generally meaning "having structure that" performs the task or tasks during operation. As such, the component may be configured to perform the task even when the component is not currently performing that task *(e.g.,* a set of electrical conductors may be configured to electrically connect a module to another module, even when the two modules are not connected). In some contexts, "configured to" may be a broad recitation of structure generally meaning "having circuitry that" performs the task or tasks during operation. As such, the component may be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

### Example Wireless Communication System

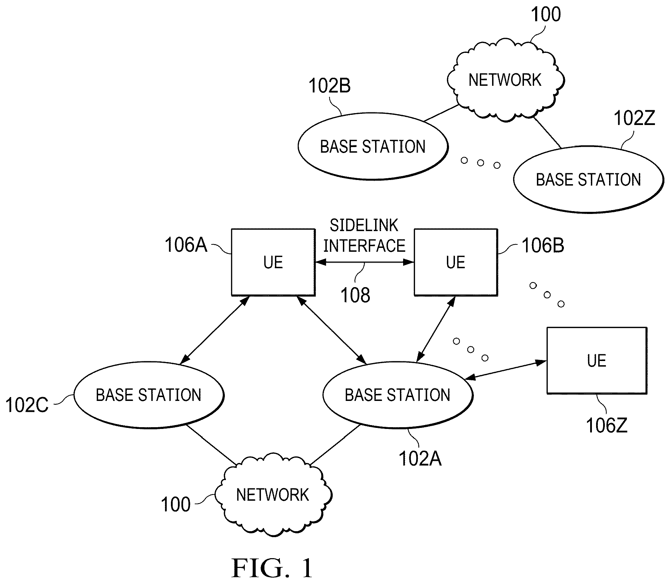

Turning now to Figure 1, a simplified example of a wireless communication system is illustrated, according to some aspects. It is noted that the system of Figure 1 is a non-limiting example of a possible system, and that features of this disclosure may be implemented in any of various systems, as desired.

As shown, the example wireless communication system includes a base station 102A, which communicates over a transmission medium with one or more user devices 106A and 106B, through 106Z. Each of the user devices may be referred to herein as a "user equipment" (UE). Thus, the user devices 106 are referred to as UEs or UE devices.

The base station (BS) 102A may be a base transceiver station (BTS) or cell site *(e.g.,* a "cellular base station") and may include hardware that enables wireless communication with the UEs 106A through 106Z.

The communication area (or coverage area) of the base station may be referred to as a "cell." The base station 102A and the UEs 106 may be configured to communicate over the transmission medium using any of various radio access technologies (RATs), also referred to as wireless communication technologies, or telecommunication standards, such as GSM, UMTS (associated with, for example, WCDMA or TD-SCDMA air interfaces), LTE, LTE-A, 5G NR, HSPA, 3GPP2 CDMA2000. Note that if the base station 102A is implemented in the context of LTE, it may alternately be referred to as an 'eNodeB' or 'eNB'. Note that if the base station 102A is implemented in the context of 5G NR, it may alternately be referred to as a 'gNodeB' or 'gNB'.

In some aspects, the UEs 106 may be IoT UEs, which may comprise a network access layer designed for low-power IoT applications utilizing short-lived UE connections. An IoT UE may utilize technologies such as M2M or MTC for exchanging data with an MTC server or device via a public land mobile network (PLMN), proximity service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. As an example, vehicles to everything (V2X) may utilize ProSe features using an SL interface for direct communications between devices. The IoT UEs may also execute background applications (e.g., keep-alive messages, status updates, and the like) to facilitate the connections of the IoT network.

As shown, the UEs 106, such as UE 106A and UE 106B, may directly exchange communication data via an SL interface 108. The SL interface 108 may be a PC5 interface comprising one or more physical channels, including but not limited to a Physical Sidelink Shared Channel (PSSCH), a Physical Sidelink Control Channel (PSCCH), a Physical Sidelink Broadcast Channel (PSBCH), and a Physical Sidelink Feedback Channel (PSFCH).

In V2X scenarios, one or more of the base stations 102 may be or act as Road Side Units (RSUs). The term RSU may refer to any transportation infrastructure entity used for V2X communications. An RSU may be implemented in or by a suitable wireless node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like. In one example, an RSU is a computing device coupled with radio frequency circuitry located on a roadside that provides connectivity support to passing vehicle UEs (vUEs). The RSU may also include internal data storage circuitry to store intersection map geometry, traffic statistics, media, as well as applications/software to sense and control ongoing vehicular and pedestrian traffic. The RSU may operate on the 5.9 GHz Intelligent Transport Systems (ITS) band to provide very low latency communications required for high speed events, such as crash avoidance, traffic warnings, and the like. Additionally, or alternatively, the RSU may operate on the cellular V2X band to provide the aforementioned low latency communications, as well as other cellular communications services. Additionally, or alternatively, the RSU may operate as a Wi-Fi hotspot (2.4 GHz band) and/or provide connectivity to one or more cellular networks to provide uplink and downlink communications. The computing device(s) and some or all of the radio frequency circuitry of the RSU may be packaged in a weatherpr23 enclosure suitable for outdoor installation, and it may include a network interface controller to provide a wired connection (*e.g*., Ethernet) to a traffic signal controller and/or a backhaul network.

As shown, the base station 102A may also be equipped to communicate with a network 100 *(e.g.,* a core network of a cellular service provider, a telecommunication network such as a public switched telephone network (PSTN), and/or the Internet, among various possibilities). Thus, the base station 102A may facilitate communication between the user devices and/or between the user devices and the network 100. In particular, the cellular base station 102A may provide UEs 106 with various telecommunication capabilities, such as voice, SMS and/or data services.

Base station 102A and other similar base stations (such as base stations 102B through 102N) operating according to the same or a different cellular communication standard may thus be provided as a network of cells, which may provide continuous or nearly continuous overlapping service to UEs 106A-106Z and similar devices over a geographic area via one or more cellular communication standards.

Thus, while base station 102A may act as a "serving cell" for UEs 106A-106Z as illustrated in Figure 1, each UE 106 may also be capable of receiving signals from (and possibly within communication range of) one or more other cells (which may be provided by base stations 102B-102Z and/or any other base stations), which may be referred to as "neighboring cells." Such cells may also be capable of facilitating communication between user devices and/or between user devices and the network 100. Such cells may include "macro" cells, "micro" cells, "pico" cells, and/or cells which provide any of various other granularities of service area size. For example, base stations 102A and 102B illustrated in Figure 1 may be macro cells, while base station 102Z may be a micro cell. Other configurations are also possible.

In some aspects, base station 102A may be a next generation base station, *(e.g.,* a 5G New Radio (5G NR) base station, or "gNB"). In some aspects, a gNB may be connected to a legacy evolved packet core (EPC) network and/or to a NR core (NRC) / 5G core (5GC) network. In addition, a gNB cell may include one or more transition and reception points (TRPs). In addition, a UE capable of operating according to 5G NR may be connected to one or more TRPs within one or more gNBs. For example, it may be possible that that the base station 102A and one or more other base stations 102 support joint transmission, such that UE 106 may be able to receive transmissions from multiple base stations (and/or multiple TRPs provided by the same base station). For example, as illustrated in Figure 1, both base station 102A and base station 102C are shown as serving UE 106A.

Note that a UE 106 may be capable of communicating using multiple wireless communication standards. For example, the UE 106 may be configured to communicate using a wireless networking (*e.g.*, Wi-Fi) and/or peer-to-peer wireless communication protocol (e.g., Bluetooth, Wi-Fi peer-to-peer, and the like) in addition to at least one of the cellular communication protocol discussed in the definitions above. The UE 106 may also or alternatively be configured to communicate using one or more global navigational satellite systems (GNSS) *(e.g.,* GPS or GLONASS), one or more mobile television broadcasting standards (*e.g*., ATSC-M/H), and/or any other wireless communication protocol, if desired. Other combinations of wireless communication standards (including more than two wireless communication standards) are also possible.

In one or more embodiments, the UE 106 may be a device with cellular communication capability such as a mobile phone, a hand-held device, a computer, a laptop, a tablet, a smart watch, or other wearable device, or virtually any type of wireless device.

The UE 106 may include a processor (processing element) that is configured to execute program instructions stored in memory. The UE 106 may perform any of the method aspects described herein by executing such stored instructions. Alternatively, or in addition, the UE 106 may include a programmable hardware element such as an FPGA (field-programmable gate array), an integrated circuit, and/or any of various other possible hardware components that are configured to perform (*e.g*., individually or in combination) any of the method aspects described herein, or any portion of any of the method aspects described herein.

The UE 106 may include one or more antennas for communicating using one or more wireless communication protocols or technologies. In some aspects, the UE 106 may be configured to communicate using, for example, NR or LTE using at least some shared radio components. As additional possibilities, the UE 106 could be configured to communicate using CDMA2000 (1xRTT / 1xEV-DO / HRPD / eHRPD) or LTE using a single shared radio and/or GSM or LTE using the single shared radio. The shared radio may couple to a single antenna, or may couple to multiple antennas (*e.g*., for a multiple-input multiple output (MIMO) configuration) for performing wireless communications. In general, a radio may include any combination of a baseband processor, analog RF signal processing circuitry (*e.g.*, including filters, mixers, oscillators, amplifiers, and the like), or digital processing circuitry (*e.g*., for digital modulation as well as other digital processing). Similarly, the radio may implement one or more receive and transmit chains using the aforementioned hardware. For example, the UE 106 may share one or more parts of a receive and/or transmit chain between multiple wireless communication technologies, such as those discussed above.

In some aspects, the UE 106 may include separate transmit and/or receive chains (*e.g*., including separate antennas and other radio components) for each wireless communication protocol with which it is configured to communicate. As a further possibility, the UE 106 may include one or more radios which are shared between multiple wireless communication protocols, and one or more radios which are used exclusively by a single wireless communication protocol. For example, the UE 106 might include a shared radio for communicating using either of LTE or 5G NR (or either of LTE or 1xRTT, or either of LTE or GSM, among various possibilities), and separate radios for communicating using each of Wi-Fi and Bluetooth. Other configurations are also possible.

In some aspects, a downlink resource grid may be used for downlink transmissions from any of the base stations 102 to the UEs 106, while uplink transmissions may utilize similar techniques. The grid may be a time-frequency grid, called a resource grid or time-frequency resource grid, which is the physical resource in the downlink in each slot. Such a time-frequency plane representation is a common practice for Orthogonal Frequency Division Multiplexing (OFDM) systems, which makes it intuitive for radio resource selection. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid may comprise a number of resource blocks, which describe the mapping of certain physical channels to resource elements. Each resource block comprises a collection of resource elements. There are several different physical downlink channels that are conveyed using such resource blocks.

The physical downlink shared channel (PDSCH) may carry user data and higher layer signaling to the UEs 106. The physical downlink control channel (PDCCH) may carry information about the transport format and resource allocations related to the PDSCH channel, among other things. It may also inform the UEs 106 about the transport format, resource allocation, and HARQ (Hybrid Automatic Repeat Request) information related to the uplink shared channel. Typically, downlink scheduling (assigning control and shared channel resource blocks to the UE 102 within a cell) may be performed at any of the base stations 102 based on channel quality information fed back from any of the UEs 106. The downlink resource assignment information may be sent on the PDCCH used for (*e.g*., assigned to) each of the UEs.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH may be transmitted using one or more CCEs, depending on the size of the Downlink Control Information (DCI) and the channel condition. There may be four or more different PDCCH formats defined in LTE with different numbers of CCEs *(e.g.,* aggregation level, L=1, 2, 4, or 8).

### Example Communication Device

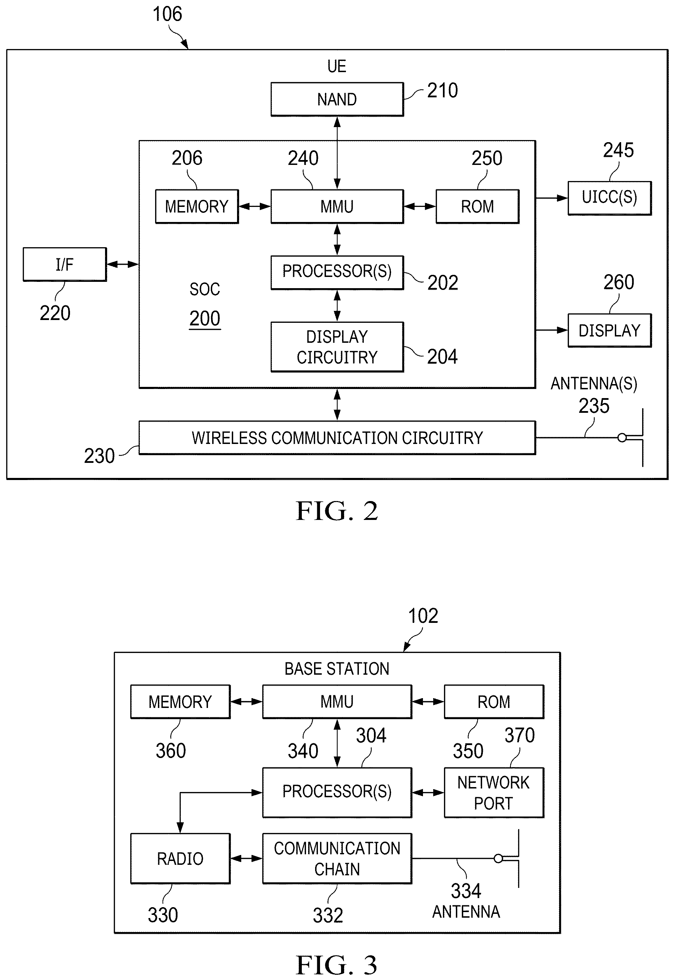

Figure 2 illustrates an example simplified block diagram of a communication device 106, according to some aspects. It is noted that the block diagram of the communication device of Figure 2 is only one example of a possible communication device. According to aspects, communication device 106 may be a UE device or terminal, a mobile device or mobile station, a wireless device or wireless station, a desktop computer or computing device, a mobile computing device *(e.g.,* a laptop, notebook, or portable computing device), a tablet, and/or a combination of devices, among other devices. As shown, the communication device 106 may include a set of components 200 configured to perform core functions. For example, this set of components may be implemented as a system on chip (SOC), which may include portions for various purposes. Alternatively, this set of components 200 may be implemented as separate components or groups of components for the various purposes. The set of components 200 may be coupled (e.g., communicatively; directly or indirectly) to various other circuits of the communication device 106.

For example, the communication device 106 may include various types of memory (*e.g*., including NAND flash 210), an input/output interface such as connector I/F 220 *(e.g.,* for connecting to a computer system; dock; charging station; input devices, such as a microphone, camera, keyboard; output devices, such as speakers; and the like), the display 260, which may be integrated with or external to the communication device 106, and wireless communication circuitry 230 *(e.g.,* for LTE, LTE-A, NR, UMTS, GSM, CDMA2000, Bluetooth, Wi-Fi, NFC, GPS, and the like). In some aspects, communication device 106 may include wired communication circuitry (not shown), such as a network interface card *(e.g.,* for Ethernet connection).

The wireless communication circuitry 230 may couple (*e.g*., communicatively; directly or indirectly) to one or more antennas, such as antenna(s) 235 as shown. The wireless communication circuitry 230 may include cellular communication circuitry and/or short to medium range wireless communication circuitry, and may include multiple receive chains and/or multiple transmit chains for receiving and/or transmitting multiple spatial streams, such as in a MIMO configuration.

In some aspects, as further described below, cellular communication circuitry 230 may include one or more receive chains (including and/or coupled to (*e.g*., communicatively; directly or indirectly) dedicated processors and/or radios) for multiple Radio Access Technologies (RATs) *(e.g.,* a first receive chain for LTE and a second receive chain for 5G NR). In addition, in some aspects, cellular communication circuitry 230 may include a single transmit chain that may be switched between radios dedicated to specific RATs. For example, a first radio may be dedicated to a first RAT (*e.g*., LTE) and may be in communication with a dedicated receive chain and a transmit chain shared with a second radio. The second radio may be dedicated to a second RAT *(e.g.,* 5G NR) and may be in communication with a dedicated receive chain and the shared transmit chain. In some aspects, the second RAT may operate at mmWave frequencies. As mmWave systems operate in higher frequencies than typically found in LTE systems, signals in the mmWave frequency range are heavily attenuated by environmental factors. To help address this attenuating, mmWave systems often utilize beamforming and include more antennas as compared LTE systems. These antennas may be organized into antenna arrays or panels made up of individual antenna elements. These antenna arrays may be coupled to the radio chains.

The communication device 106 may also include and/or be configured for use with one or more user interface elements.

The communication device 106 may further include one or more smart cards 245 that include Subscriber Identity Module (SIM) functionality, such as one or more Universal Integrated Circuit Card(s) (UICC(s)) cards 245.

As shown, the SOC 200 may include processor(s) 202, which may execute program instructions for the communication device 106 and display circuitry 204, which may perform graphics processing and provide display signals to the display 260. The processor(s) 202 may also be coupled to memory management unit (MMU) 240, which may be configured to receive addresses from the processor(s) 202 and translate those addresses to locations in memory (*e.g*., memory 206, read only memory (ROM) 250, NAND flash memory 210) and/or to other circuits or devices, such as the display circuitry 204, wireless communication circuitry 230, connector I/F 220, and/or display 260. The MMU 240 may be configured to perform memory protection and page table translation or set up. In some aspects, the MMU 240 may be included as a portion of the processor(s) 202.

As noted above, the communication device 106 may be configured to communicate using wireless and/or wired communication circuitry. As described herein, the communication device 106 may include hardware and software components for implementing any of the various features and techniques described herein. The processor 202 of the communication device 106 may be configured to implement part or all of the features described herein (e.g., by executing program instructions stored on a memory medium). Alternatively (or in addition), processor 202 may be configured as a programmable hardware element, such as a Field Programmable Gate Array (FPGA), or as an Application Specific Integrated Circuit (ASIC). Alternatively (or in addition) the processor 202 of the communication device 106, in conjunction with one or more of the other components 200, 204, 206, 210, 220, 230, 240, 245, 250, 260 may be configured to implement part or all of the features described herein.

In addition, as described herein, processor 202 may include one or more processing elements. Thus, processor 202 may include one or more integrated circuits (ICs) that are configured to perform the functions of processor 202. In addition, each integrated circuit may include circuitry (e.g., first circuitry, second circuitry, and the like) configured to perform the functions of processor(s) 202.

Further, as described herein, wireless communication circuitry 230 may include one or more processing elements. In other words, one or more processing elements may be included in wireless communication circuitry 230. Thus, wireless communication circuitry 230 may include one or more integrated circuits (ICs) that are configured to perform the functions of wireless communication circuitry 230. In addition, each integrated circuit may include circuitry (e.g., first circuitry, second circuitry, and the like) configured to perform the functions of wireless communication circuitry 230.

### Example Base Station

Figure 3 illustrates an example block diagram of a base station 102, according to some aspects. It is noted that the base station of Figure 3 is a non-limiting example of a possible base station. As shown, the base station 102 may include processor(s) 304 which may execute program instructions for the base station 102. The processor(s) 304 may also be coupled to memory management unit (MMU) 340, which may be configured to receive addresses from the processor(s) 304 and translate those addresses to locations in memory (e.g., memory 360 and read only memory (ROM) 350) or to other circuits or devices.

The base station 102 may include at least one network port 370. The network port 370 may be configured to couple to a telephone network and provide a plurality of devices, such as UE devices 106, access to the telephone network as described above in Figure 1.

The network port 370 (or an additional network port) may also or alternatively be configured to couple to a cellular network, *e.g*., a core network of a cellular service provider. The core network may provide mobility related services and/or other services to a plurality of devices, such as UE devices 106. In some cases, the network port 370 may couple to a telephone network via the core network, and/or the core network may provide a telephone network (*e.g*., among other UE devices serviced by the cellular service provider).

In some aspects, base station 102 may be a next generation base station, (*e.g*., a 5G New Radio (5G NR) base station, or "gNB"). In such aspects, base station 102 may be connected to a legacy evolved packet core (EPC) network and/or to a NR core (NRC) / 5G core (5GC) network. In addition, base station 102 may be considered a 5G NR cell and may include one or more transition and reception points (TRPs). In addition, a UE capable of operating according to 5G NR may be connected to one or more TRPs within one or more gNBs.

The base station 102 may include at least one antenna 334, and possibly multiple antennas. The at least one antenna 334 may be configured to operate as a wireless transceiver and may be further configured to communicate with UE devices 106 via radio 330. The antenna 334 communicates with the radio 330 via communication chain 332. Communication chain 332 may be a receive chain, a transmit chain or both. The radio 330 may be configured to communicate via various wireless communication standards, including 5G NR, LTE, LTE-A, GSM, UMTS, CDMA2000, Wi-Fi, and the like.

The base station 102 may be configured to communicate wirelessly using multiple wireless communication standards. In some instances, the base station 102 may include multiple radios, which may enable the base station 102 to communicate according to multiple wireless communication technologies. For example, as one possibility, the base station 102 may include an LTE radio for performing communication according to LTE as well as a 5G NR radio for performing communication according to 5G NR. In such a case, the base station 102 may be capable of operating as both an LTE base station and a 5G NR base station. When the base station 102 supports mmWave, the 5G NR radio may be coupled to one or more mmWave antenna arrays or panels. As another possibility, the base station 102 may include a multi-mode radio, which is capable of performing communications according to any of multiple wireless communication technologies (e.g., 5G NR and LTE, 5G NR and Wi-Fi, LTE and Wi-Fi, LTE and UMTS, LTE and CDMA2000, UMTS and GSM, and the like).

Further, the BS 102 may include hardware and software components for implementing or supporting implementation of features described herein. The processor 304 of the base station 102 may be configured to implement or support implementation of part or all of the methods described herein (e.g., by executing program instructions stored on a memory medium). Alternatively, the processor 304 may be configured as a programmable hardware element, such as a Field Programmable Gate Array (FPGA), or as an Application Specific Integrated Circuit (ASIC), or a combination thereof. Alternatively (or in addition) the processor 304 of the BS 102, in conjunction with one or more of the other components 330, 332, 334, 340, 350, 360, 370 may be configured to implement or support implementation of part or all of the features described herein.

In addition, as described herein, processor(s) 304 may include one or more processing elements. Thus, processor(s) 304 may include one or more integrated circuits (ICs) that are configured to perform the functions of processor(s) 304. In addition, each integrated circuit may include circuitry (*e.g.*, first circuitry, second circuitry, and the like) configured to perform the functions of processor(s) 304.

Further, as described herein, radio 330 may include one or more processing elements. Thus, radio 330 may include one or more integrated circuits (ICs) that are configured to perform the functions of radio 330. In addition, each integrated circuit may include circuitry (*e.g*., first circuitry, second circuitry, and the like) configured to perform the functions of radio 330.

### Example Cellular Communication Circuitry

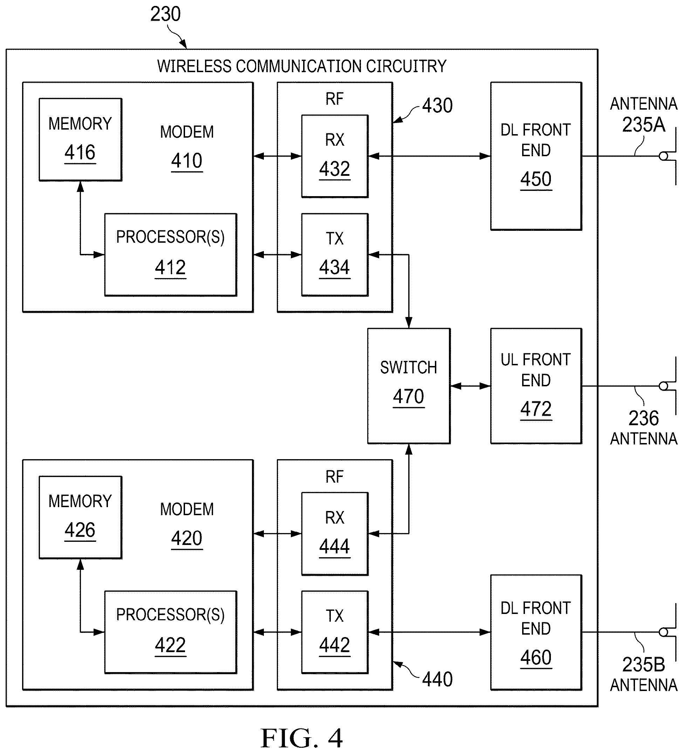

Figure 4 illustrates an example simplified block diagram of cellular communication circuitry, according to some aspects. It is noted that the block diagram of the cellular communication circuitry of Figure 4 is only one example of a possible cellular communication circuit; other circuits, such as circuits including or coupled to sufficient antennas for different RATs to perform uplink activities using separate antennas, or circuits including or coupled to fewer antennas (*e.g*., that may be shared among multiple RATs) are also possible. According to some aspects, cellular communication circuitry 230 may be included in a communication device, such as communication device 106 described above. As noted above, communication device 106 may be a UE device, a mobile device or mobile station, a wireless device or wireless station, a desktop computer or computing device, a mobile computing device *(e.g.,* a laptop, notebook, or portable computing device), a tablet and/or a combination of devices, among other devices.

The cellular communication circuitry 230 may couple (*e.g*., communicatively; directly or indirectly) to one or more antennas, such as antennas 235a, 235b, and 236 as shown. In some aspects, cellular communication circuitry 230 may include dedicated receive chains (including and/or coupled to *(e.g.,* communicatively; directly or indirectly) dedicated processors and/or radios) for multiple RATs *(e.g.,* a first receive chain for LTE and a second receive chain for 5G NR). For example, as shown in Figure 4, cellular communication circuitry 230 may include a first modem 410 and a second modem 420. The first modem 410 may be configured for communications according to a first RAT, *e.g*., such as LTE or LTE-A, and the second modem 420 may be configured for communications according to a second RAT, *e.g*., such as 5G NR.

As shown, the first modem 410 may include one or more processors 412 and a memory 416 in communication with processors 412. Modem 410 may be in communication with a radio frequency (RF) front end 430. RF front end 430 may include circuitry for transmitting and receiving radio signals. For example, RF front end 430 may include receive circuitry (RX) 432 and transmit circuitry (TX) 434. In some aspects, receive circuitry 432 may be in communication with downlink (DL) front end 450, which may include circuitry for receiving radio signals via antenna 235a.

Similarly, the second modem 420 may include one or more processors 422 and a memory 426 in communication with processors 422. Modem 420 may be in communication with an RF front end 440. RF front end 440 may include circuitry for transmitting and receiving radio signals. For example, RF front end 440 may include receive circuitry 442 and transmit circuitry 444. In some aspects, receive circuitry 442 may be in communication with DL front end 460, which may include circuitry for receiving radio signals via antenna 235b.

In some aspects, a switch 470 may couple transmit circuitry 434 to uplink (UL) front end 472. In addition, switch 470 may couple transmit circuitry 444 to UL front end 472. UL front end 472 may include circuitry for transmitting radio signals via antenna 236. Thus, when cellular communication circuitry 230 receives instructions to transmit according to the first RAT *(e.g.,* as supported via the first modem 410), switch 470 may be switched to a first state that allows the first modem 410 to transmit signals according to the first RAT (*e.g*., via a transmit chain that includes transmit circuitry 434 and UL front end 472). Similarly, when cellular communication circuitry 230 receives instructions to transmit according to the second RAT *(e.g.,* as supported via the second modem 420), switch 470 may be switched to a second state that allows the second modem 420 to transmit signals according to the second RAT (*e.g*., via a transmit chain that includes transmit circuitry 444 and UL front end 472).

As described herein, the first modem 410 and/or the second modem 420 may include hardware and software components for implementing any of the various features and techniques described herein. The processors 412, 422 may be configured to implement part or all of the features described herein, e.g., by executing program instructions stored on a memory medium (*e.g*., a non-transitory computer-readable memory medium). Alternatively (or in addition), processors 412, 422 may be configured as a programmable hardware element, such as an FPGA (Field Programmable Gate Array), or as an ASIC (Application Specific Integrated Circuit). Alternatively (or in addition) the processors 412, 422, in conjunction with one or more of the other components 430, 432, 434, 440, 442, 444, 450, 470, 472, 235 and 236 may be configured to implement part or all of the features described herein.

In addition, as described herein, processors 412, 422 may include one or more processing elements. Thus, processors 412, 422 may include one or more integrated circuits (ICs) that are configured to perform the functions of processors 412, 422. In addition, each integrated circuit may include circuitry *(e.g.,* first circuitry, second circuitry, and the like) configured to perform the functions of processors 412, 422.

In some aspects, the cellular communication circuitry 230 may include only one transmit/receive chain. For example, the cellular communication circuitry 230 may not include the modem 420, the RF front end 440, the DL front end 460, and/or the antenna 235b. As another example, the cellular communication circuitry 230 may not include the modem 410, the RF front end 430, the DL front end 450, and/or the antenna 235a. In some aspects, the cellular communication circuitry 230 may also not include the switch 470, and the RF front end 430 or the RF front end 440 may be in communication, e.g., directly, with the UL front end 472.

### Issues in Early Measurement Reporting (EMR)

As discussed above, Early Measurements Reports (EMR) were introduced by 3GPP in 5G to allow for proactive UE measurements on network pre-configured frequency layers. The network can then use the measurement results provided by the UE (e.g., measurement reports initiated by the network via UE Information Request and received via UE Information Response) to configure the UE with a Secondary Cell Group (SCG), i.e., an active Primary Secondary Cell (PSCell) and/or one or more activated/deactivated Secondary Cells (SCells).

Utilizing this EMR procedure could theoretically reduce the Carrier Aggregation (CA) and/or Dual Connectivity (DC) setup delay times significantly (e.g., from more than 500 ms to approximately 50-70 ms). However, the UE being configured with EMR measurements would be required to continue measuring the configured frequency layers while in Idle mode, i.e., in order to have some stored measurement results to report once it transitions to Connected mode, which would be power inefficient.

Another limitation of current EMR functionality is that the configured frequency layers for measurements are not necessarily related to particular services, use-cases, RF conditions, etc. Hence, there is little room for the UE to use intelligence or other logic to decide on which frequency layers to prioritize for EMR measurements, e.g., based on its expected traffic, RF conditions, etc.

Instead, the current EMR configuration simply specifies a set of frequency layers without indication of the set of viable cells in those frequency layers viability for different purposes (i.e., PSCells in the case of DC, or SCells in the case of CA). Upon a UE's transition from Idle to Connected mode, the UE would have to wait for a network (NW)-initiated UE Information Request, followed by an RRC Reconfiguration to continue with the CA/DC setup. Therefore, at present, UE measurements in Idle mode can only be reported in response to a NW UE Information Request. Hence, the notion of autonomous UE and/or UE-initiated Idle mode measurements reporting is not currently supported.

Another issue with current cell switching practice is that, when a UE is in Connected mode, the delay and interruption incurred by the UE to change its SCG's SpCell can be onerous. This procedure can have one of the following setups: 1) the NW controls where the UE would have to get reconfigured via RRC (i.e., PSCell Change); or 2) the UE controls with NW pre-configuration on thresholds upon which the UE could trigger the SCG's SpCell change (i.e., Conditional PSCell Change).

For NW-Controlled SCG's SpCell change (e.g., PSCell Change), upon receiving PSCell change in a subframe, n, the UE shall be capable to transmit the PRACH preamble towards the PSCell in FR2 no later than in subframe n + T_{config_PSCell}, where T_{config_PSCell} = T_{RRC_delay} + T_{processing} + T_{search} + T_{Δ} + T_{PSCell+DU} + 2ms, and where: T_{RRC_delay} = 16ms; for source and target cells in the same FR, T_{processing} = 20ms, and for different FRs, T_{processing} = 40ms. For a known target cell, T_{search} = 0ms, and unknown cells with Ês/Iot (i.e., a signal-to-interference-plus-noise ratio) of ≥ -2dB, T_{search} = 24 * Tᵣₛ ms; T_{Δ} = Tᵣₛ, T_{PSCell_DU} ≤ T_{PRACH_Assoc} + 10ms; 5ms ≤ Tᵣₛ ≤ 160ms; and 10ms ≤ T_{PRACH_Assoc} ≤ 160ms.

For UE-Controlled with NW pre-configuration SCG's SpCell change (i.e., a so-called Conditional PSCell Change), upon receiving conditional PSCell change in subframe n, the UE shall be capable of transmitting a PRACH preamble towards PSCell in FR2 no later than in subframe n + T_{config_PSCell_Conditional}, where T_{config_PSCell_Conditional} = T_{RRC_delay} + T_{Event_DU} + Tₘₑₐₛᵤᵣₑ + T_{UE_preparation} + T_{processing} + T_{Δ} + T_{PSCell_DU} + 2ms, and where: T_{RRC_delay} = 16ms; T_{Event_DU} is the time from when the UE successfully decodes a conditional PSCell change command until a condition exists at the measurement reference point which will trigger the conditional PSCell change; Tₘₑₐₛᵤᵣₑ ≥ 200ms for FR1 and Tₘₑₐₛᵤᵣₑ ≥ 400ms for FR2; T_{UE_preparation} ≤ 10ms; for source and target cells in the same FR, T_{processing} = 20ms, and for different FRs, T_{processing} = 40ms; T_{Δ} = Tᵣₛ, T_{PSCell_DU} ≤ T_{PRACH_Assoc} + 10ms; 5ms ≤ Tᵣₛ ≤ 160ms; 10ms ≤ T_{PRACH_Assoc} ≤ 160ms; and T_{PSCell_Conditional} = T_{UE_preparation} + T_{processing} + T_{Δ} + T_{PSCell_DU} + 2ms.

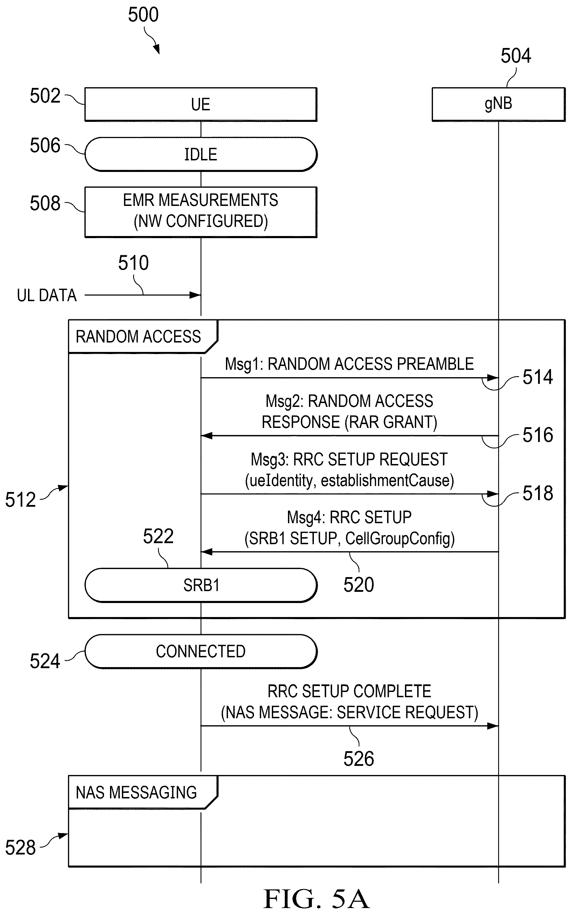

Turning now to Figures 5A-5D, diagrams illustrating examples of a network using EMR results reported from a UE to configure or change a Secondary Cell Group (SCG) for the UE are shown, according to some aspects. First, Figure 5A shows a diagram 500 that involves an exemplary UE 502 and an exemplary gNB 504. In diagram 500, the UE 502 begins in an Idle state 506. In this Idle state, UE 502 may have been previously network configured to perform EMR measurements 508 on one or more frequency layers.

Then, when UE 502 has pending data to transmit, i.e., Mobile Originating (MO) traffic, at 510, a Random Access procedure 512 may be initiated with the gNB 504, following the standard protocol of: the UE 502 sending a Msg1 Random Access Preamble to the gNB 504 (514); followed by the gNB 504 sending a Msg2 Random Access Response to the UE 502 including the RAR grant (516); followed by the UE 502 sending a Msg3 RRC Setup Request message (which may include a ueIdentity and an establishmentClause information elements) (518) to the gNB 504; followed by the gNB 504 sending a Msg4 RRC Setup message to the UE 502 including the Signaling Radio Bearer #1 (SRB1) setup and CellGroupConfig information elements (520). Once established, the SRB1 522 may be used for RRC messages (as well as for NAS messages prior to the establishment of SRB2).

Once UE 502 has entered a Connected state 524, it may transmit an RRC Setup Complete message (526) to the gNB 504, including a Non-Access Stratum (NAS) Message of Service Request. The NAS is a functional layer in NR that includes procedures related to 5GMM (5GS Mobility Management) and 5GSM (5GS Session Management) on the network. NAS messaging may therefore be established at block 528.

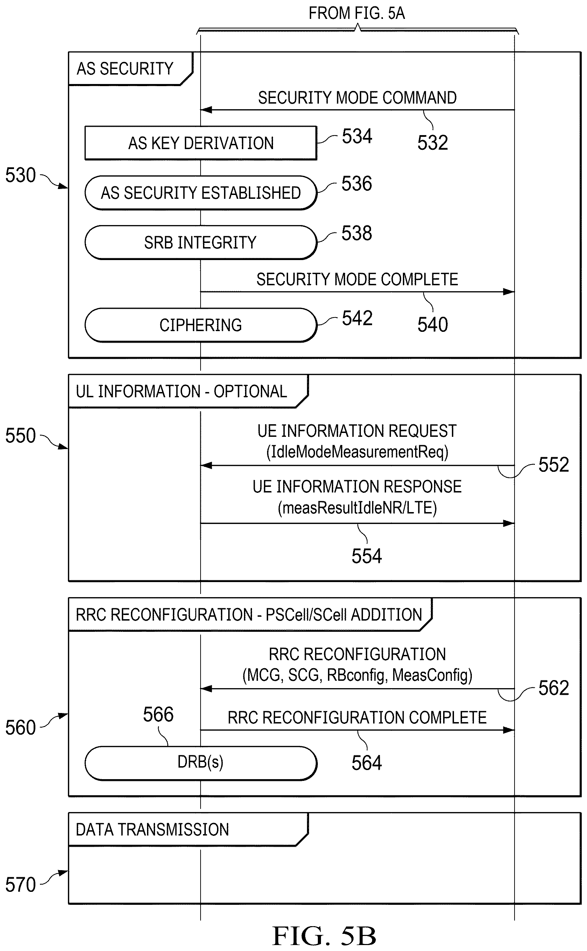

Turning now to Figure 5B, diagram 500 continues with the establishment of Access Stratum (AS) Security at block 530. Establishing AS security may comprise: the gNB 504 sending a Security Mode Command (SMC) (532) to UE 502; followed by the UE 502 performing: AS key derivation (534), AS Security establishment (536), and SRB integrity checking (538). The UE 502 may then send a Security Mode Complete message (540) to the gNB 504, allowing the UE 502 to begin ciphering processed information (542).

Next, at optional UL information block 550, the gNB 504 may send a UE Information Request 552 to the UE 502 with an IdleModeMeasurementReq, to which the UE 502 may respond by sending back a UE Information Response 554 with a measResultIdleNR (or measResultIdleLTE) information element. As discussed above, however, this process of network-initiated idle mode measurements may be inefficient.

Next, at RRC Reconfiguration block 560, a process of PSCell and/or SCell addition may be carried out by the gNB 504. In particular, the gNB 504 may transmit an RRC Reconfiguration message 562 that contains a listing of: Master Cell Group (MCG); Secondary Cell Group (SCG); Radio Bearer Configuration (RBconfig); and Measurement Configuration (MeasConfig). The UE 502 may respond with an RRC Reconfiguration Complete message (564) once it has reconfigured its Master and/or Secondary Cell Groups, and then the data radio bearers (DRBs) (566) may be established. With all bearers, security and cell groups established, the UE 502 may then begin data transmission in earnest with the gNB 504 at block 570.

However, in the scenario described with reference to Figure 5A and 5B, the UE 502 would be required to continue measuring the configured frequency layers while in Idle mode, i.e., in order to have some stored measurement results to report once it transitions to Connected mode. In some implementations, this would mean that the UE would have to measure the configured frequencies as long as a T331 timer (e.g., with a minimum of 10s and maximum of 300s) is running, and then it would be up to the UE's implementation whether or not to continue measurements after expiry of the timer.

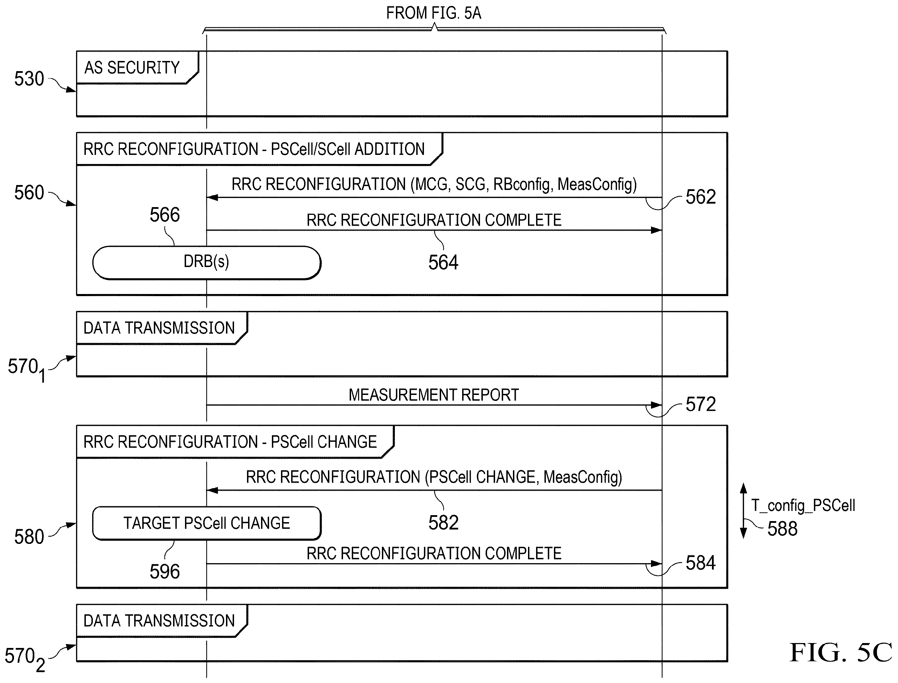

Turning now to Figure 5C, a modification of the process flow described above with reference to Figures 5A and 5B is shown. Specifically, according to Figure 5C, during a first data transmission block 570₁, a measurement report 572 may be transmitted by UE 502, which causes the gNB 504 to initiate an RRC Reconfiguration process 580 to change the PSCell of the UE 502. As described above, the time it takes to configure the UE with the PSCell (T_{config_PSCell}) may include: the time it takes for an RRC Reconfiguration message 582 to be sent to the UE 502, wherein message 582 may specify the PSCell change and any new MeasConfig information; the time it takes for the UE 502 to actually perform the Target PSCell change (586); and the time it takes for the UE 502 to transmit an RRC Reconfiguration Complete message (584) back to gNB 504. Once the new PSCell has been established, the data transmission process may be resumed at block 570₂. As described above, there can be significant delay and interruption in service any time that a UE in Connected mode is caused to change its SCG's SpCell.

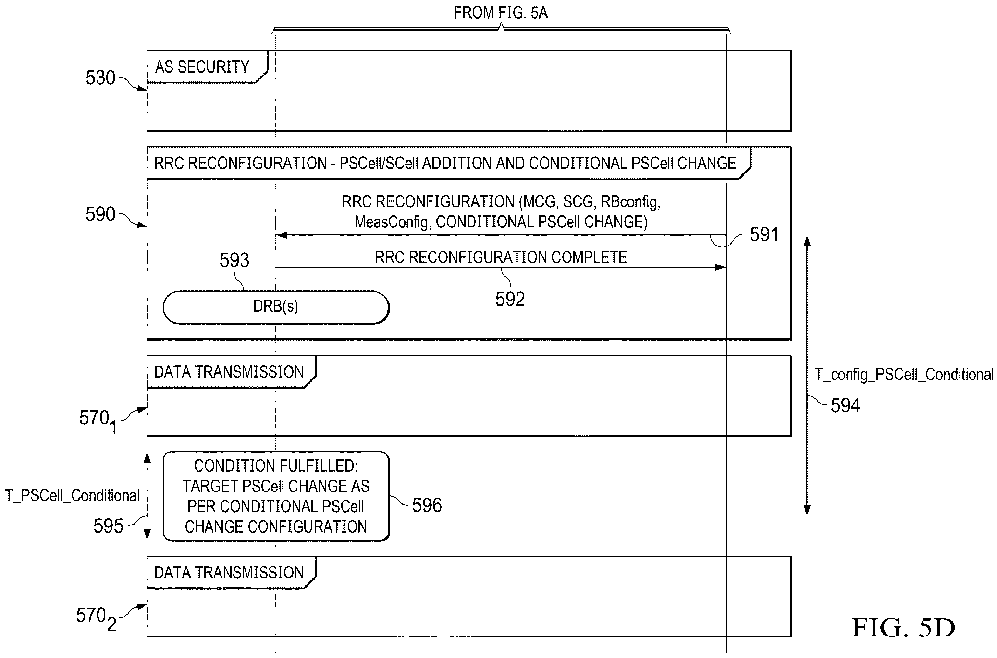

Turning now to Figure 5D, a modification of the process flow described above with reference to Figures 5A, 5B and 5C is shown. Specifically, according to Figure 5D, the UE 502 may receive a conditional PSCell change request at block 590 in the form of an RRC Reconfiguration message that specifies a PSCell/SCell addition and/or a Conditional PSCell change operation. The RRC Reconfiguration message (591) may comprise: MCG, SCG, RBConfig, MeasConfig, and Conditional PSCell Change information elements. After performing the conditional PSCell change, the UE 502 may send back an RRC Reconfiguration Complete message (592) and begin to use its newly-configured DRBs 593. Then, during a first data transmission block 570₁, a necessary condition may become fulfilled at 596, whereby the target PSCell may be changed according to the conditional PSCel change configuration that the UE was configured with at 591.

As described above, the time it takes to configure the UE with the PSCell Conditional configuration information (T_{config_PSCell_Conditional} 594) may include: the time it takes for an RRC Reconfiguration message 590 to be decoded by the UE 502, plus any additional time it takes for the necessary condition to exist to trigger the conditional PSCell change, plus the actual processing time it takes to implement the PSCell change (e.g., T_{PSCell_Conditional} 595). Once the new PSCell has been established based on implementation of the conditional logic, the data transmission process may be resumed at block 570₂.

### Service-Specific Frequency Layer Configurations

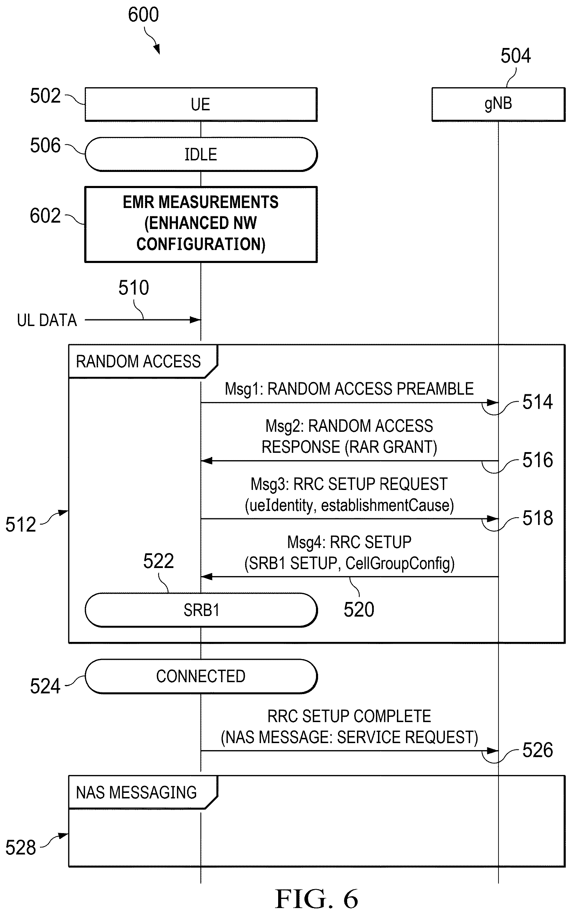

Turning now to Figure 6, a diagram 600 illustrating an example of a network using service-specific frequency layer configuration information to configure for EMR measurements to a UE is shown, according to some aspects. Compared with Figure 5A, discussed above, the network-configured EMR Measurements 508 of Figure 5A have been replaced by the enhanced network-configured EMR Measurements 602 shown in diagram 600 of Figure 6 which, as will now be described, may be used by the network to provide more rich information to the UE about which frequency layers are likely to be most appropriate for early measurement reporting in different scenarios.

Thus, according to diagram 600, the network may configure the frequency layers (e.g., via RRCRelease or SIB) to better reflect which frequency layers are suited for which services. The network could, e.g., associate each frequency layer with a specific category in the SIBs and/or RRCRelease messages. For example, in a given network configuration, there may be: application/service-aware frequency layers; Low latency service frequency layers; so-called "best effort" traffic frequency layers (e.g., those typically associated with the Internet bearer); and/or offloading frequency layers (e.g., those with information about anchor/booster cells, and/or PSCell and SCell candidates).

The UE 502 may then use internal logic to determine which frequency layers to prioritize for EMR measurements (e.g., based on UE location, mobility state, traffic, RF conditions etc.). As may now be appreciated, this additional enhancement to the network frequency layer configuration information may allow for reduced power consumption on the UE side associated with the EMR feature. The rest of the EMR feature may remain unchanged to that described in Figures 5A and 5B above, and the UE could then report the frequency layers of interest (e.g., those that were measured while the UE was in Idle mode as part of EMR measurements, given the anticipated UE traffic, UE location, etc.) once the UE transitions to Connected mode.

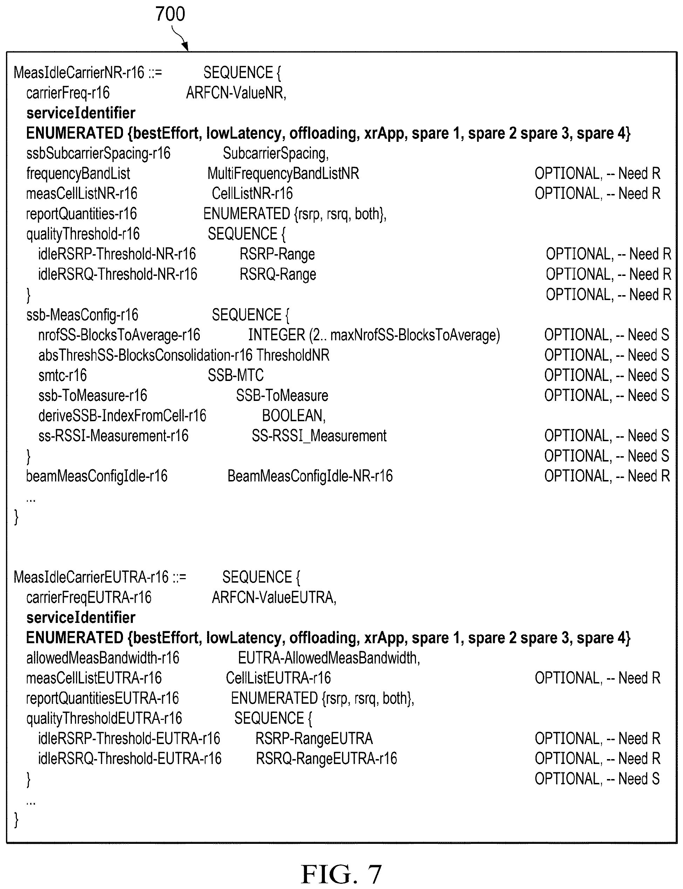

Turning to Figure 7, examples of enhanced Measurement Idle Carrier IEs 700 are shown, according to some aspects. In particular, the MeasIdleCarrierNR-r16 IE has been modified to include a "serviceIdentifier" field, which may contain an enumerated list of predetermined service types that a given frequency layer may be used for, such as: bestEffort, lowLatency, offloading, or xrApp. It is to be understood that these service identifiers are merely intended to be exemplary and illustrative of the types of descriptors that may be utilized in a given implementation.

Similarly, the MeasIdleCarrierEUTRA-r16 IE has also been modified to include a "serviceIdentifier" field, which may contain an enumerated list of predetermined service types that a given frequency layer may be used for, such as: bestEffort, lowLatency, offloading, or xrApp. As described above, these additional service identifier types may allow UEs to use internal logic to decide one or more frequency layers to prioritize for EMR measurements, based on the UE's current conditions, location, and status, etc. It is to be understood that these service identifiers are also intended to be exemplary and illustrative of the types of descriptors that may be utilized in a given implementation.

### User Equipment (UE)-Initiated and Autonomous EMR Measurements

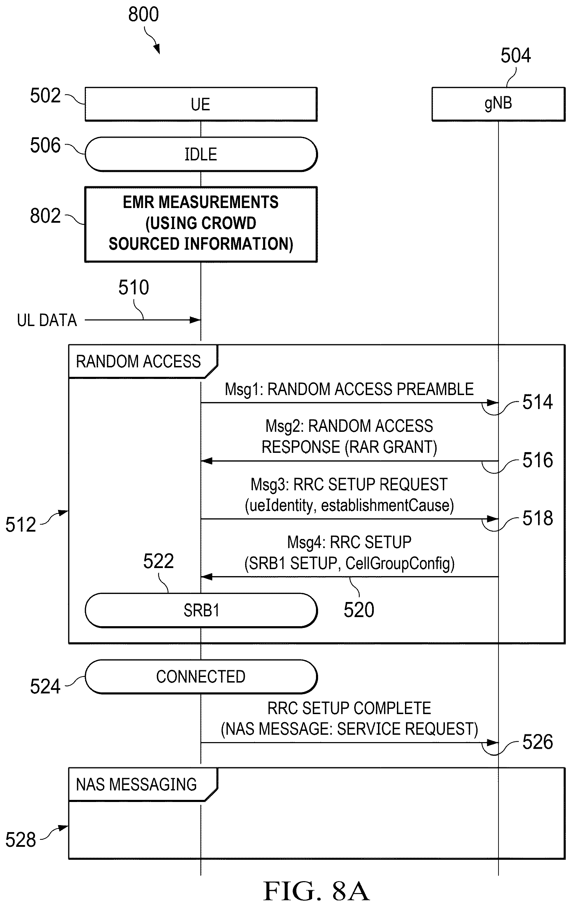

Turning now to Figures 8A-8C, diagrams 800/810/820 illustrating examples of a UE using crowdsourced frequency layer information to autonomously determine the EMR frequency layers for a UE to measure are shown, according to some aspects. According to the embodiments illustrated in Figures 8A-8C, the process of EMR may be further enhanced, such that the UE does not even necessarily need to depend on network-configured frequency layer information at all for proactively performing measurements while in Idle mode.

Instead, according to some aspects, turning first to Figure 8A and diagram 800, at block 802, a UE may use crowd sourcing (e.g., information from first party or third-party servers accessible to the UE) to get information regarding the most suitable frequency layers (and even cells) to prioritize for EMR measurements, e.g., given anticipated UE location, mobility state, traffic, RF conditions etc. As with the current EMR feature behavior in 3GPP, a UE may then report the set of frequency layers (and/or cells) of interest (i.e., those that were measured given the anticipated UE location, mobility state, traffic, RF conditions, etc.) once it transitions to Connected mode.

This enhanced behavior may allow for a reduced set of UE-selected frequency layers to be measured by the UE, i.e., depending on the UE's characteristics, such as the UE's anticipated traffic and any received crowd-sourced information. For example, in some aspects, only the most suitable frequency layers and cells would need to be measured and later reported to the network. According to some such aspects, the network may first initiate a "UE Information Request" to get UE Idle measurements report via the "UE Information Response" RRC message (as described above with reference to block 550)-even if the network didn't configure the particular UE with EMR frequency layer information.

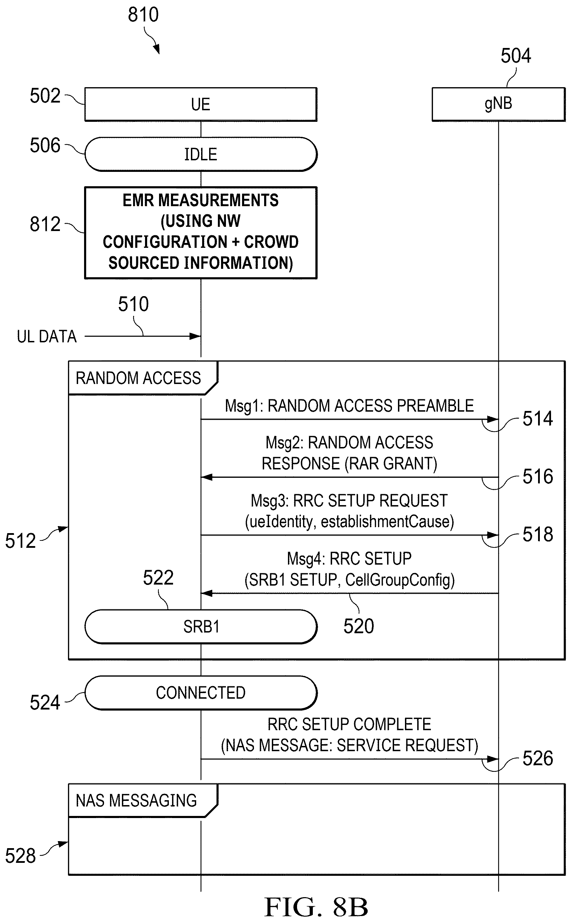

Turning now to Figure 8B and diagram 810, at block 812, a UE may use a combination of traditional network configuration information and the enhanced crowd-sourced information (described above with reference to Figure 8A) to get information regarding the most suitable frequency layers/cells to prioritize for EMR measurements. As may now be appreciated, according to diagram 810, the network could still configure the UE with EMR frequency layers, and those frequency layers would then be measured when UE transitions to Idle mode. However, the UE could then also use the crowd-sourced information to refine the configured set of frequency layers to only the most applicable ones to it (again, e.g., based on UE location, mobility state, traffic, RF conditions etc.). This would allow for further reduced power consumption on the UE side. Then, after transitioning to Connected mode (e.g., at 524), the UE could report those frequency layers using the regular network-initiated "UE Information Request" and "UE Information Response" mechanism (as described above with reference to block 550). According to some embodiments, this process shown in Figure 8B may also be extended to Connected mode measurements, e.g., wherein the UE could use the crowd-sourced information to further refine the configured set of measurement objects (i.e., frequency layers) to only the most applicable ones to it (e.g., based on current UE location, mobility state, traffic, RF conditions, etc.).

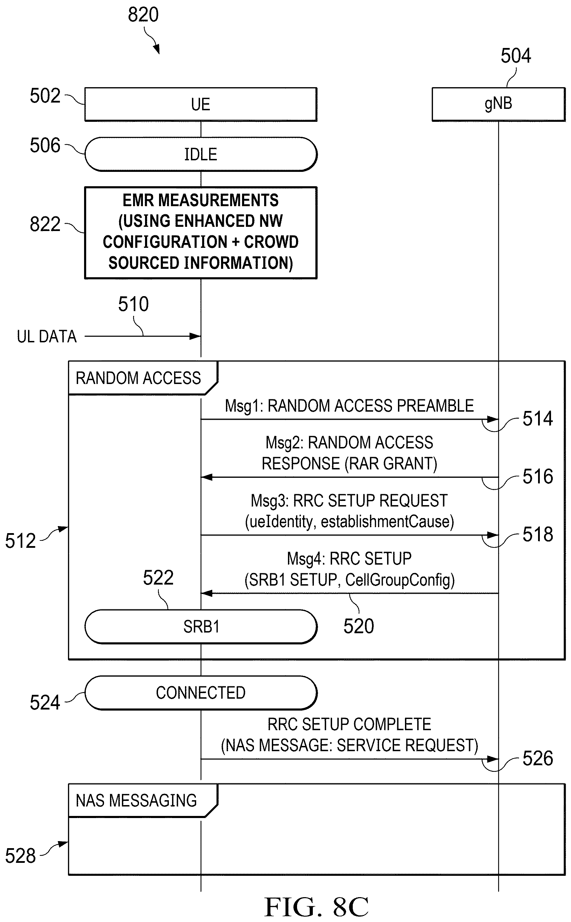

Turning now to Figure 8C and diagram 820, at block 822, a UE may use a combination of enhanced network configuration information (described above with reference to Figure 6) and the enhanced crowd-sourced information (described above with reference to Figure 8A) to get information regarding the most suitable frequency layers/cells to prioritize for EMR measurements. As may now be appreciated, according to diagram 820, a UE may use internal logic to decide which frequency layers to prioritize for EMR measurements based on the enhanced network configuration. Additionally, the UE could further use the crowdsourced information to refine the configured set of frequency layers to only the most applicable ones based on its given conditions and situation. Again, this would allow for reduced power consumption on the UE side. Then, after transitioning to Connected mode (e.g., at 524), the UE could report those frequency layers using the regular network-initiated "UE Information Request" and "UE Information Response" mechanism (as described above with reference to block 550).

### UE-Initiated EMR Reporting

Currently, in 3GPP, the only way for a UE to report its network-configured EMR measurements is via the aforementioned network-initiated UE Information Request and UE Information Response message exchange process. A consequence of this design is that, if the network does not initiate such requests, then the UE will not be able to report the measurements that it conducted while it was in Idle mode. Thus, according to some aspects described herein, a UE may be programmed to autonomously report its Idle mode measurements, i.e., without the need to wait for explicit network-initiated messaging.

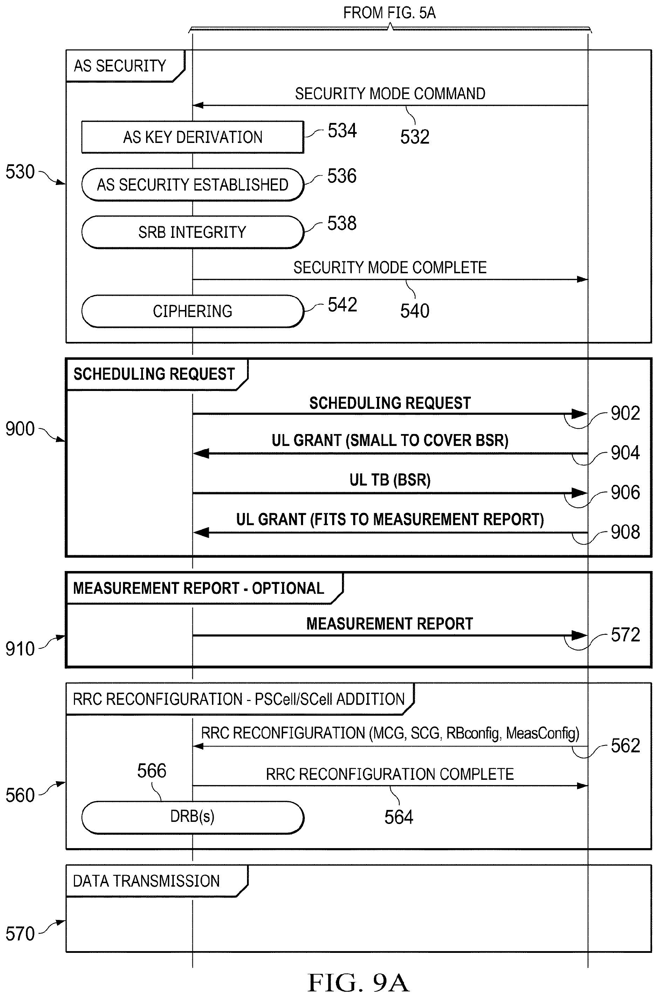

Figures 9A-9C are diagrams illustrating examples of UE-initiated reporting of Idle mode measurements without waiting for network-initiated messaging are shown, according to some aspects. Turning first to Figure 9A, an example is illustrated wherein the UE may send a scheduling request (SR) 900, wait for a small UL grant to report Buffer Status Report (BSR) at 904, send back an uplink transport block (906) with its BSR, and then wait for a suitable UL grant to send its Idle mode measurements report (e.g., Measurement Report 572 shown in block 910).

In other aspects, the initial UL grant received as a response to the SR (e.g., as shown at 904, may not be large enough to accommodate sending the Idle mode measurements report directly. Thus, instead, as shown at 908, an UL grant may be received that is big enough to fit the measurement report in response to the BSR. In this example, the UL grant 908 may be large enough to cover reporting the measurement report directly, i.e., without the need for BSR reporting first. Note that this idea is not necessarily a replacement of the network-initiated UE Information Request and Response for reporting Idle mode measurements discussed above. Rather, it is another complementary way to allow the UE to report such measurements without waiting for a network-initiated request, i.e., allowing for UE-initiated EMR reporting.

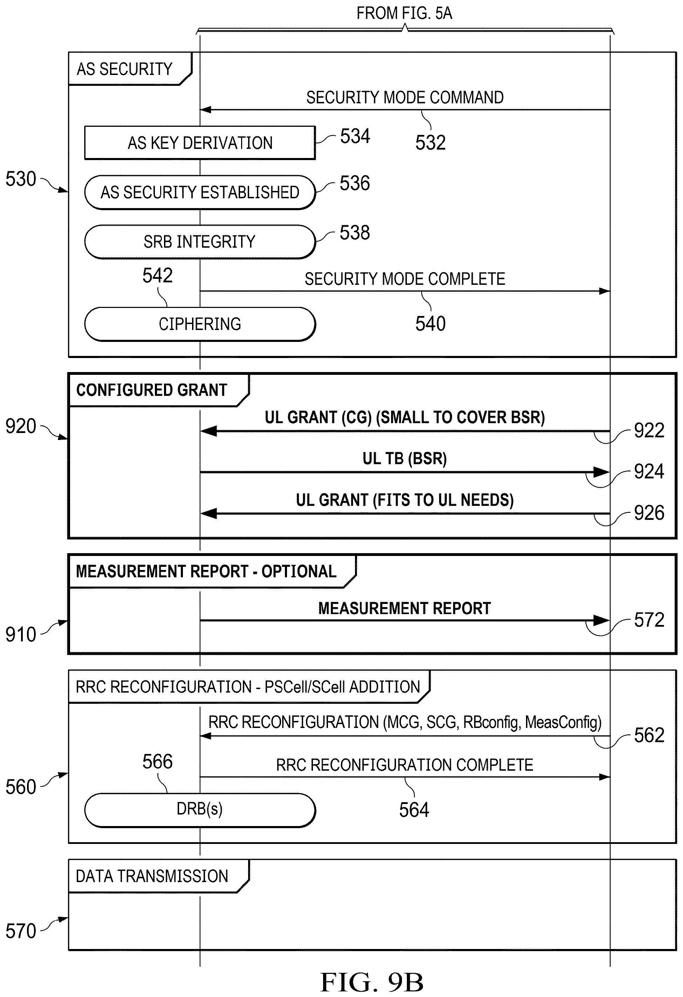

Turning now to Figure 9B, another example is illustrated that is a continuation of the example illustrated in Figure 9A. The method illustrated in Figure 9B also comprises a method for a UE to autonomously initiate reporting of its Idle mode measurements, i.e., without the need to wait for network-initiated messaging. In the example of Figure 9B, however, the UE would make use of an UL configured grant procedure 920, wherein a configured UL grant that fits for reporting BSR (922) is transmitted to the UE, the UE sends back an uplink transport block (924) with its BSR, and then waits for a suitable UL grant to send its Idle mode measurements report (926). Note that this method can also be aligned with the network, such that the UL configured grant is big enough to accommodate for sending the Idle mode measurements report directly. Note that this idea is not necessarily a replacement of the network-initiated UE Information Request and Response for reporting Idle mode measurements discussed above. Rather, it's another complementary way to allow the UE to report such measurements without waiting for a network-initiated request, i.e., allowing for UE-initiated EMR reporting.

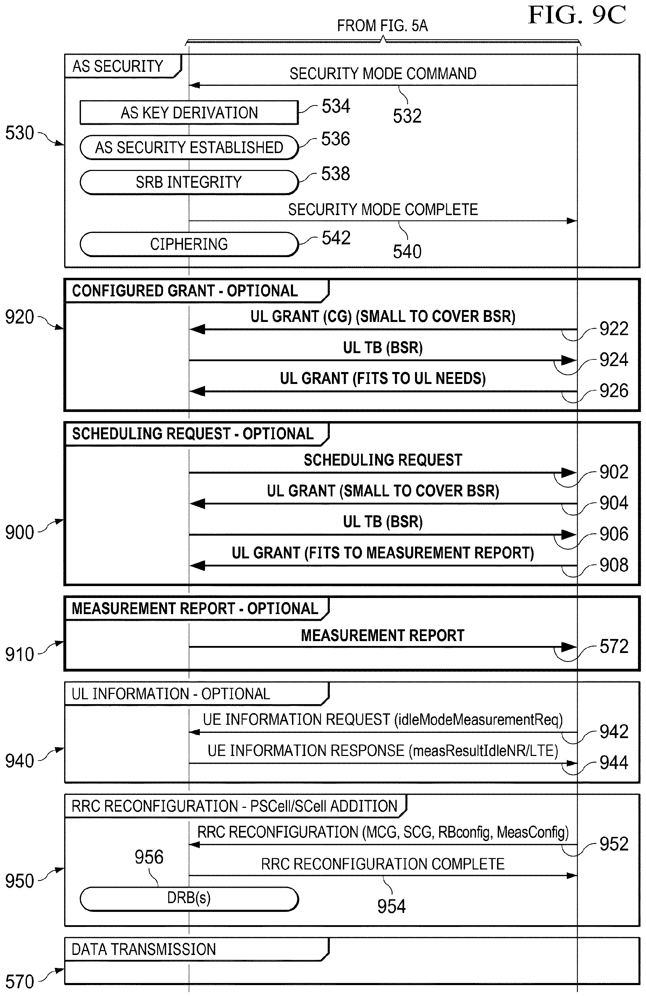

Turning now to Figure 9C, yet another example is illustrated that is a continuation of the examples illustrated in Figures 9A and 9B. The method illustrated in Figure 9C also comprises a method for a UE to initiate reporting of its Idle mode measurements without the need to wait for network-initiated messaging. The method of Figure 9C essentially allows for the optional usage of the Configured Grant-based UL grant process 920 (as described above in Figure 9B) or the SR-based UL grant process 900 (as described above in Figure 9A).

As may now be appreciated, one further enhancement available with the method of Figure 9C is the variety in the type of information that the configured EMR measurements can be based on. For example, the measurements may be based on the aforementioned enhanced network configured information, where it is reflected which frequency layers are suited for which service (as described above with reference to Figure 6), and/or the measurements may be based on using crowd-sourced information regarding the most suitable frequency layers and even cells to measure given anticipated UE location, mobility state, traffic, RF conditions etc. (as described above with reference to Figure 8A).

### Primary Secondary Cell (PSCell) Activation and Deactivation Techniques

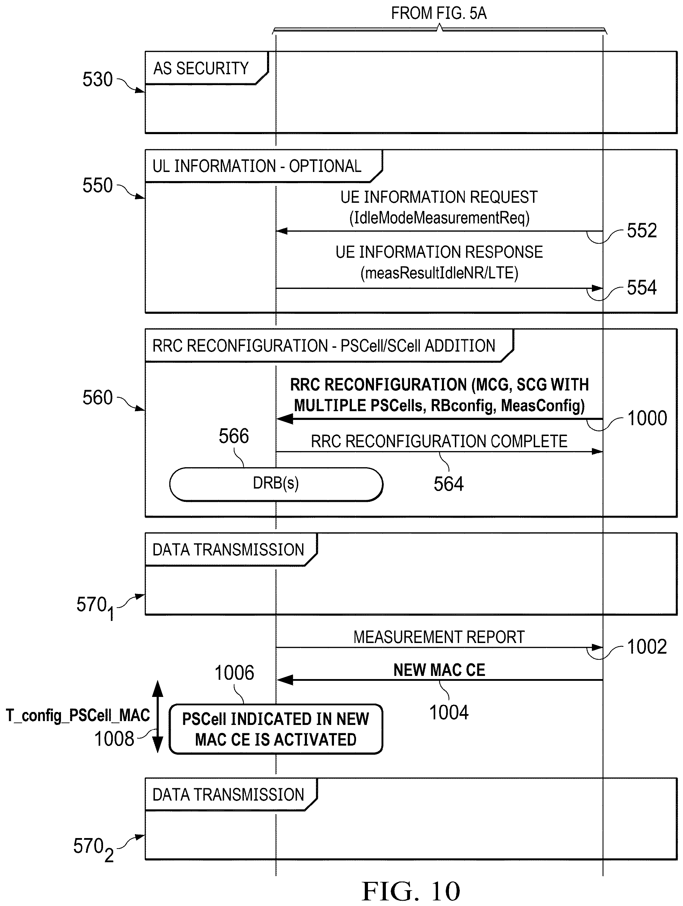

Turning now to Figure 10, a diagram illustrating an example of a UE receiving a set of PSCells from the network including an active PSCell and one or more deactivated PSCells is shown, according to some aspects. In the example illustrated in Figure 10, the legacy EMR configuration approach is assumed, i.e., wherein the UE is configured with a set of frequency layers (e.g., via RRCRelease or SIBs), upon which it can do Idle mode search and measurements. According to this example, the UE may simply proceed as with the current steps followed in the 3GPP-defined EMR procedure up until it reports the Idle mode measurement results via the UE Information Response.

One enhancement to the legacy approach that is illustrated in Figure 10 is related to the use of the RRC Reconfiguration message. According to the example of Figure 10, a list of potential PSCells and SCells are added to the RRC Reconfiguration message 1000. For example, according to some embodiments, RRC Reconfiguration message 1000 may add not just a single PSCell, but a set of two or more PSCells with only one of them initially activated. In some such embodiments, the first PSCell listed in the set may be treated as the initially activated PSCell. The other PSCells in the set may then be considered as deactivated PSCells.

The UE could then provide Layer 3 (L3) measurement results for the deactivated PSCells in a similar fashion to the measurement results reported for the deactivated SCells (i.e., with a lower cadence than for regular activated serving cell measurements). According to some such embodiments, the network can then initiate a switch between the set of configured PSCells via a newly-introduced MAC CE message 1004 (and/or a newly-introduced field in the DCI, not illustrated), wherein the network is programmed to use the provided L3 measurement results for making such decisions. Then, at 1006, the UE may activate the PSCell indicated in the MAC CE message 1004. The total time for this procedure may be represented by the value T_{config_PSCell_MAC} (1008). This approach would allow a simple method for PSCell change-without facing the additional overhead and latency caused by the current PSCell change approach.

In another embodiment, an alternative to having one of the PSCells in the list activated initially (e.g., the first PSCell in the set, as described above with reference to Figure 10), is to have an explicit MAC CE indication activating one of the PSCells in the list and indicating that all other PSCells are initially deactivated. With regard to the delay incurred by the PSCell activation, in one embodiment, wherein no synchronization is assumed among the list of configured (i.e., deactivated) PSCells, then additional RACH delay is expected, similar to the current delay indicated in the PSCell change and conditional PSCell change procedures. In this type of embodiment, the UE may still choose the beam based on the RACH procedure. Then, upon receiving the PSCell activation in a hypothetical subframe n, the UE shall be capable to transmit PRACH preamble towards PSCell no later than in subframe: n + (T_{config_PSCell_MAC} / NR Slot Length), where the value of T_{config_PSCell_MAC} (1008) can be comprised of a sum of the following components: T_{HARQ} + T_{activation} + T_{PSCell_DU} (wherein T_{activation} = T_{Δ} + 5, and T_{Δ} = Tᵣₛ).

In another embodiment, wherein synchronization *is* assumed among the list of configured (i.e., deactivated) PSCells, then it can be assumed that no RACH is needed for the activation of the deactivated PSCell in the list (similar to the SCell activation procedure). In this embodiment, the UE may receive an additional MAC CE based Transmission Configuration Indicator (TCI) state indication indicating the active TCI state for the newly activated PSCell. Then, upon receiving PSCell activation hypothetical subframe n, the UE shall be capable to transmit a valid CSI report no later than in subframe: n + (T_{config_PSCell_MAC} / NR Slot Length), where the value of T_{config_PSCell_MAC} (1008) in this embodiment can be comprised of a sum of the following components: T_{HARQ} + T_{activation} + T_{CSI_Reporting} (i.e., following the typical SCell activation delay). This approach is expected to reduce the delay incurred from PSCell change or conditional PSCell change significantly.

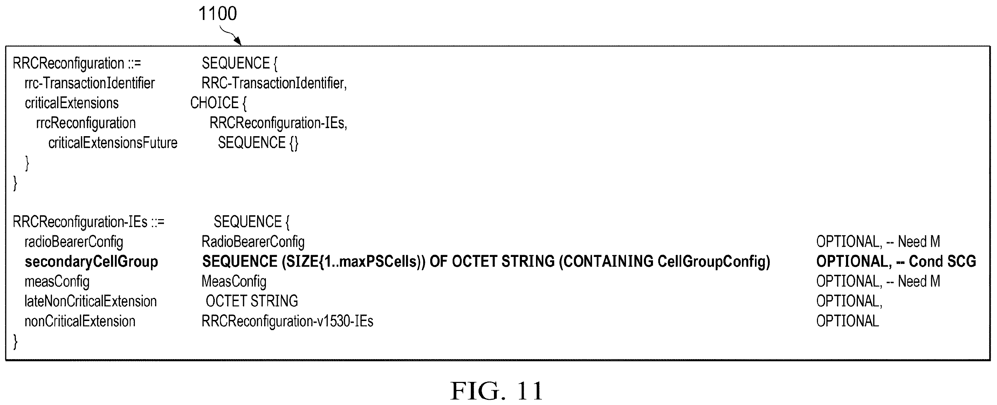

Turning now to Figure 11, examples of enhanced RRC Reconfiguration RRC messages 1100 are shown, according to some aspects. For example, the RRCReconfiguration-IEs RRC message has been modified to include an optional "secondaryCellGroup" sequence, which may have a size from 1 up to the maximum number of PSCells allowed in a given network configuration, and each entry in the sequence may comprise an octet string containing the CellGroupConfig information. This provides multiple PSCell configurations that would comprise the list of potential PSCells for the UE, of which only one can be activated at a time.

### Idle Mode Fast PSCell Addition

According to still other embodiments disclosed herein, referred to as "fast PSCell addition" embodiments, a network may be programmed to configure a UE with a set of frequency layers (i.e., as described above with reference to Figure 6) along with a set of potential PSCells (i.e., as described above with reference to Figure 10) for faster SCG setup. According to the fast PSCell addition embodiments described herein, the information elements (i.e., referring back to the examples described above with reference to Figure 6) may be set the following values: (1) the serviceIdentifier may be set to a value of offloading; (2) the measCellListNR-r16 field may be used to identify a viable list of NR PSCells; and/or (3) the measCellListEUTRA-r16 field may be used to identify a viable list of LTE PSCells.

As will be described in the following Figures, the fast PSCell addition embodiments may comprise the following updates to existing RRC messages: (1) the RRC Setup Request message may add a measResultIdleNR/EUTRA field to allow for measurement results reporting before an AS security context is established and add a new EstablishmentCause indicating "App Need - Fast PSCell Addition"; (2) the RRC Setup message may add a secondaryCellGroup field similar to the already available masterCellGroup field used for parallel PSCell addition (Note that the network is still in control, meaning that it performs Access Control by either allowing PSCell addition via secondaryCellGroup addition, or rejecting it by skipping the IE.); and (3) the RRC Setup Complete message may add an scg-Response filed similar to the RRCReconfigurationComplete field.

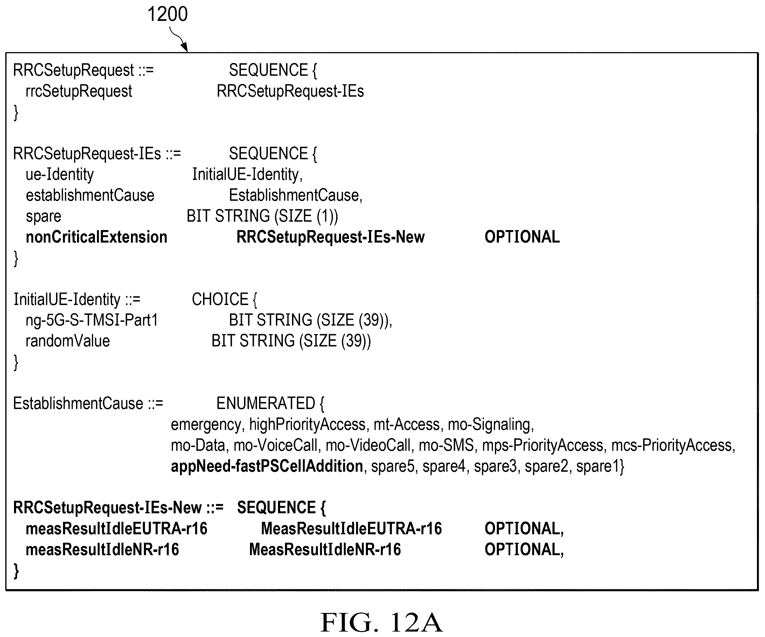

Turning now to Figures 12A-12C, examples of enhanced RRC Setup Request RRC Messages are shown, according to some aspects. For example, the information blocks 1200 shown in Figure 12A include a modified RRCSetupRequest-IEs message with a new "nonCriticalExtension" field for a new RRCSetupRequest-IEs-New information element. Figure 12A also shows a proposed modification to the EstablishmentClause field to include an "appNeed-fastPSCellAddition" option for those occasions when the UE needs to quickly add a new PSCell. Figure 12A also shows an example of the proposed new RRCSetupRequest-IEs-New message, having optional fields for both measResultIdleEUTRA-r16 and measResultIdleNR-r16. These reported measurements could be used by the network, e.g., to identify the viable cells that could be added as PSCells.

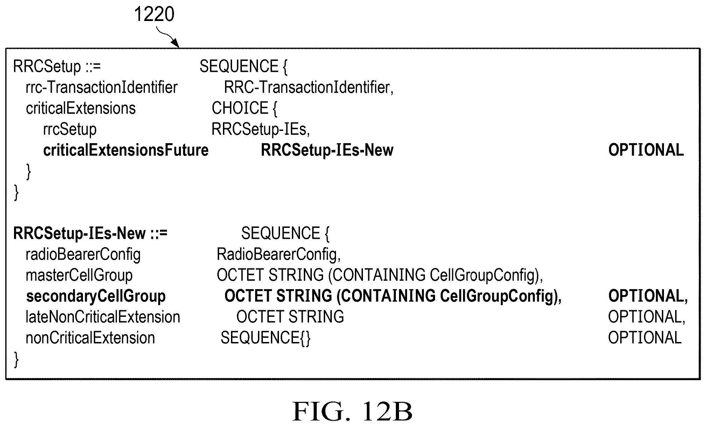

Turning now to the RRC Setup Message 1220 shown in Figure 12B, there is a proposed new optional field in the RRCSetup message called "criticalExtensionsFuture," which may include the RRCSetup-IEs-New message, and which may be used in the future for other types of critical extensions needed during RRC setup. Figure 12B also shows a proposed RRCSetup-IEs-New message that includes an optional "secondaryCellGroup" field that contains CellGroupConfig information for a single PSCell.

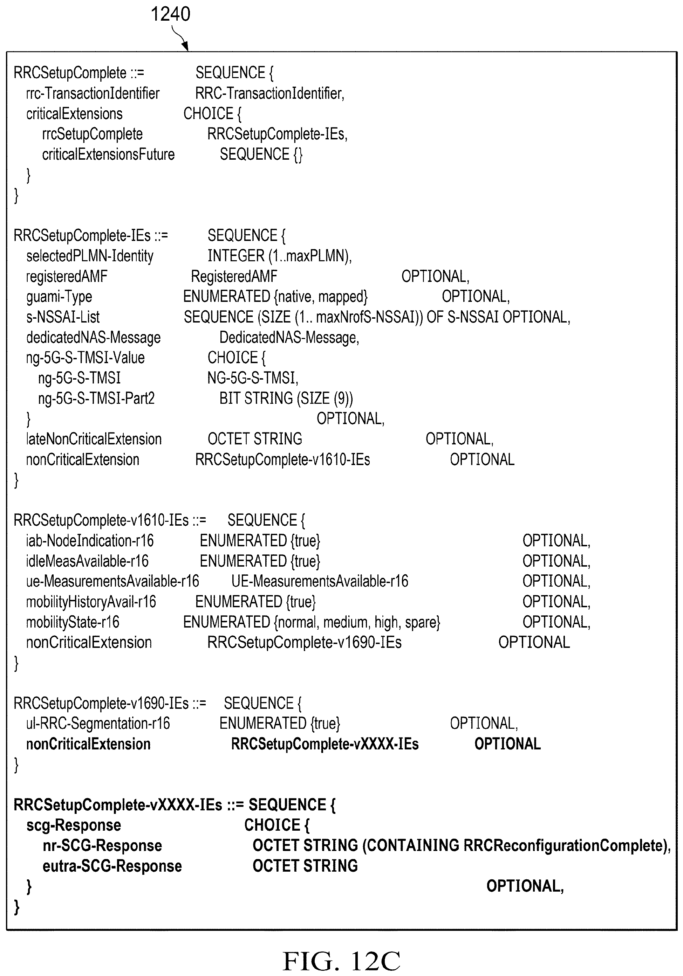

Turning now to the exemplary RRC messages 1240 shown in Figure 12C, there is a proposed new optional field in the RRCSetupComplete-v1610-IEs RRC message for the "nonCriticalExtension" of type RRCSetupComplete-v1690-IEs. The RRCSetupComplete-v1690-IEs may, in turn, include a nonCriticalExtension of type RRCSetupComplete-vXXXX-IEs that has an scg-Response field that may comprise a choice of nr-SCG-Response or eutra-SCG-Response.

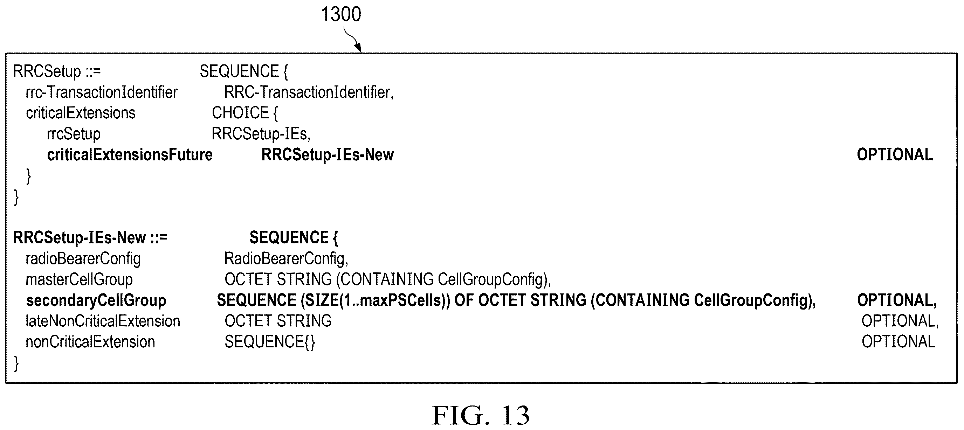

Turning now to Figure 13, an example of an RRC Setup message having a list of SCGs 1300 is shown, according to some aspects. The RRC Setup Message 1300 shown in Figure 13 include a proposed new optional field in the RRCSetup information block called "criticalExtensionsFuture," which may include RRCSetup-IEs-New messages, and which may be used in the future for other types of critical extensions needed during RRC setup. Figure 13 also shows a proposed RRCSetup-IEs-New message that includes an optional "secondaryCellGroup" sequence, which may have a size from one up to the maximum number of PSCells allowed in a given network configuration, and each entry in the sequence may comprise an octet string containing the CellGroupConfig information. This provides multiple PSCell configurations that would comprise the list of potential PSCells for the UE, of which only one can be activated at a time.

### Idle Mode Fast PSCell Addition and MAC CE and/or DCI Activation/Deactivation of Cells

According to still other embodiments disclosed herein, the techniques of the aforementioned "fast PSCell addition" embodiments may be combined with the techniques of using new MAC CE messages and/or DIC fields (described above with reference to Figure 10) to activate and deactivate PSCells in a configured set of PSCells for a given UE.

According to some such embodiments, the same IEs updates described above with reference to the "fast PSCell addition" embodiments may be utilized with an additional change to the RRC Setup information element to add a secondaryCellGroup field similar to the already available masterCellGroup field for parallel PSCell addition. In these embodiments, however, the secondaryCellGroup field will specify a set of deactivated PSCells. In this scenario, the network is still in control, meaning that it performs Access Control by either allowing PSCell addition via the secondaryCellGroup field addition, or rejecting it by skipping the information element altogether. In this way, the network can configure one or more PSCells in the RRC Setup message that are all deactivated.

According to some such embodiments, a PSCell can now be activated after successful Security Mode Command (SMC) completion, e.g., via one of the following options: (1) the first PSCell in the RRC Setup IE list gets automatically activated; (2) the network activates a PSCell explicitly by adding an extra IE in the SMC; (3) the network activates a PSCell explicitly via a MAC CE message sent inline with SMC; or (4) the network activates a PSCell explicitly via a MAC CE message sent after the SMC procedure is completed.

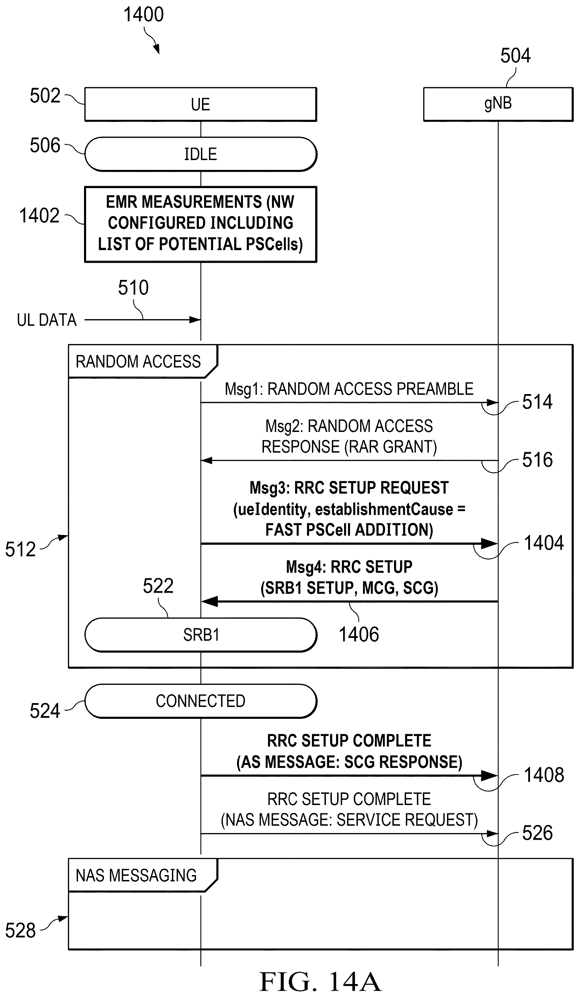

Figures 14A-14C are diagrams illustrating several of the aforementioned options for a network using service-specific frequency layer configuration information indicating a list of potential PSCells that are configured for EMR measurements by a UE followed by different ways for activating a PSCell, according to some aspects. Turning first to Figure 14A, an exemplary improved EMR configuration process set up is shown, wherein the EMR measurements 1402 made by UE 502 are based on network configured information, including a list of potential PSCells for the UE 502 to use. As part of the Random Access procedure 512, a modified Msg 3: RRC Setup Request (1404) may be used that contains the 'ueIdentity' field, as well as the aforementioned "fast PSCell addition" establishment clause. In response, the gNB 504 may return a modified Msg4: RRC setup including the SRB1 setup information, as well as the MCG and a list of potential SCGs. Then, upon transitioning the connected state at 524, the UE 502 may send an RRC Setup Complete message 1408 that comprises an AS message specifying the UE's SCG Response (e.g., as described above in reference to Figure 12C's enhancement to the RRC Setup Complete message to include an scg-Response field containing RRC ReconfigurationComplete).

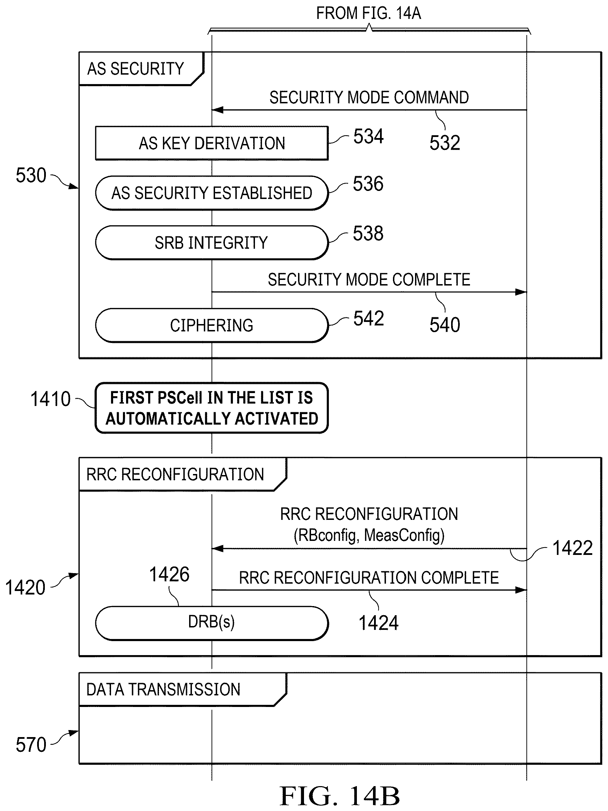

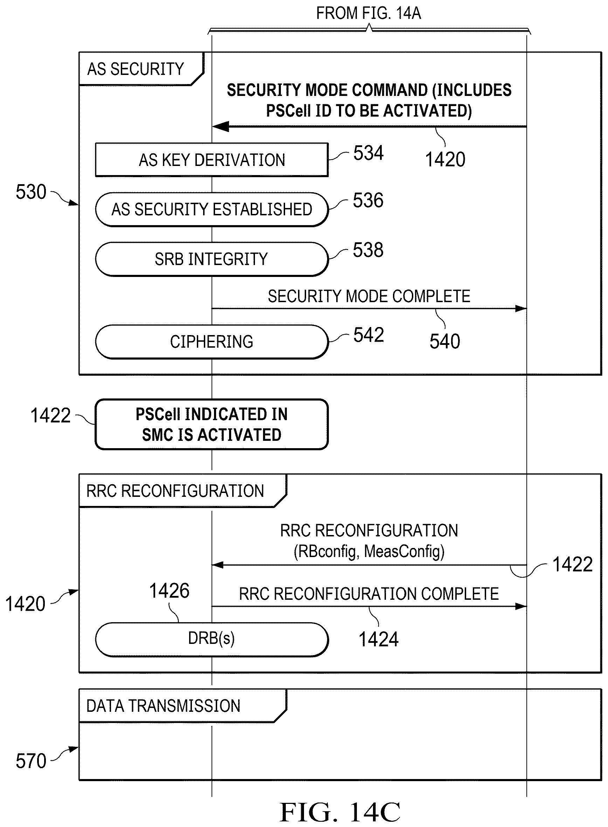

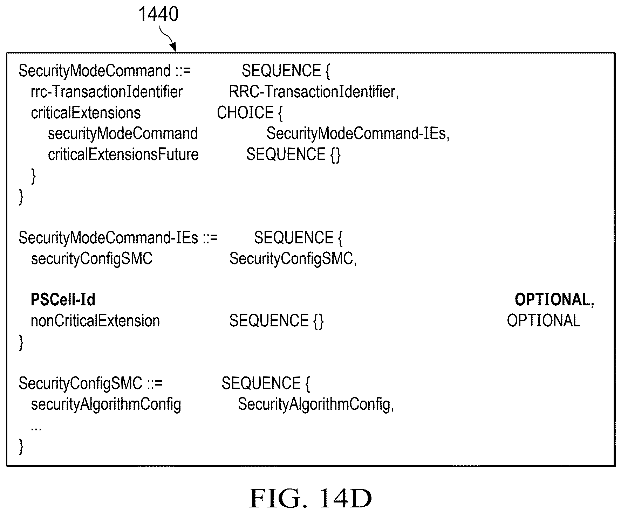

Turning now to Figure 14B, one possible completion of the example of Figure14A aligning with option (1) above is shown, wherein, at block 1410, the first PSCell in the RRC Setup IE list gets automatically activated. Turning now to Figure 14C, another possible completion of the example of Figure14A aligning with option (2) above is shown, wherein the network explicitly activates a PSCell by adding an extra IE in the Security Mode Command (SMC) 1420, as will be illustrated in further detail with respect to Figure 14D. Then, at block 1422, the PSCell that was indicated in the SMC gets activated.

Turning now to Figure 14D, an example of an enhanced Security Mode Command RRC Messages 1440 is shown, according to some aspects. The message 1440 shown in Figure 14D includes a proposed new optional field in the SecurityModeCommand-IEs information block called "pscell-ID," which may be used to indicate the activated PSCell during the SCM process.

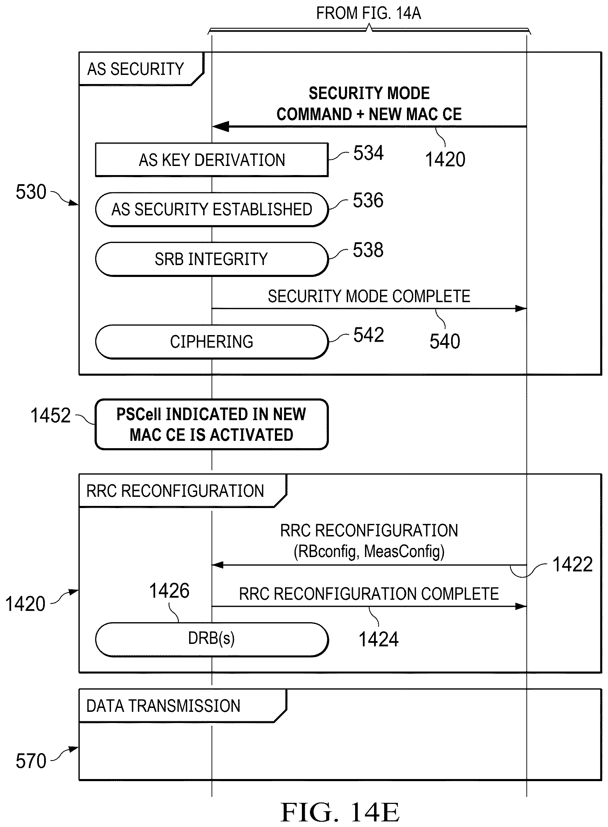

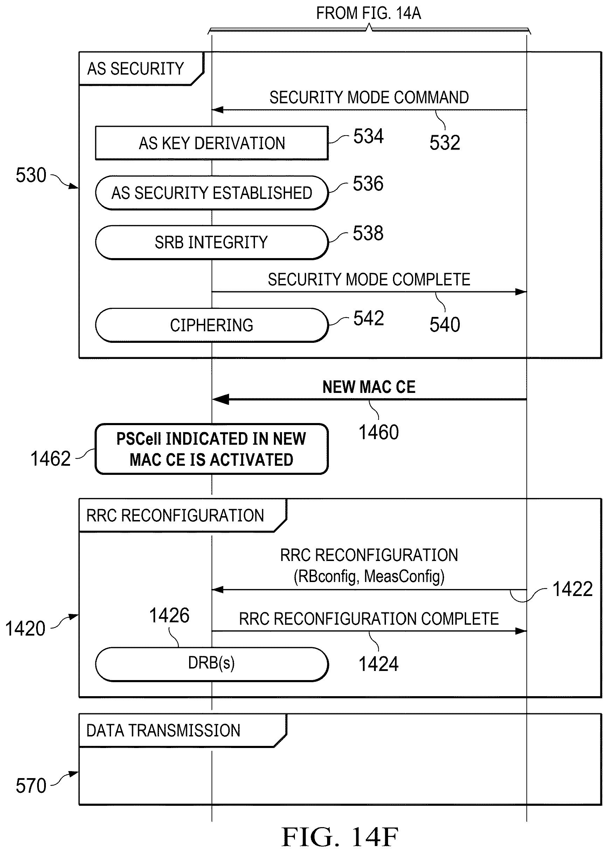

Figures 14E-14F are diagrams illustrating examples of a network using MAC CE commands to activate a PSCell for a UE, according to some aspects. Turning now to Figure 14E, one possible completion of the example of Figure 14A aligning with option (3) above is shown, wherein, at block 1450, the network indicates a PSCell explicitly via a MAC CE message sent inline with SMC. Then, at block 1452, the PSCell that was indicated via the MAC CE inline with the SMC gets activated. Turning now to Figure 14F, another possible completion of the example of Figure14A aligning with option (4) above is shown, wherein the network activates a PSCell explicitly via a MAC CE message 1460 sent after the SMC procedure is completed. Then, at block 1462, the PSCell that was indicated via the MAC CE message 1460 gets activated.

### Exemplary Methods

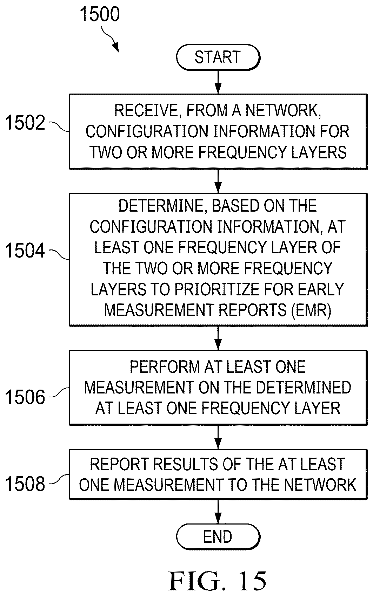

Figure 15 is a flowchart 1500 detailing a method of using service-specific frequency layer configuration information to configure EMR frequency layers for a UE to measure, according to some aspects. First, at block 1502, a UE practicing the method of 1500 may receive, from a network, configuration information for two or more frequency layers. Next, at block 1504, the method 1500 may determine, based on the configuration information, at least one frequency layer of the two or more frequency layers to prioritize for EMR. Next, at block 1506, the method 1500 may perform at least one measurement on the determined at least one frequency layer. Finally, at block 1508 the method 1500 may report the results of the at least one measurement to the network.

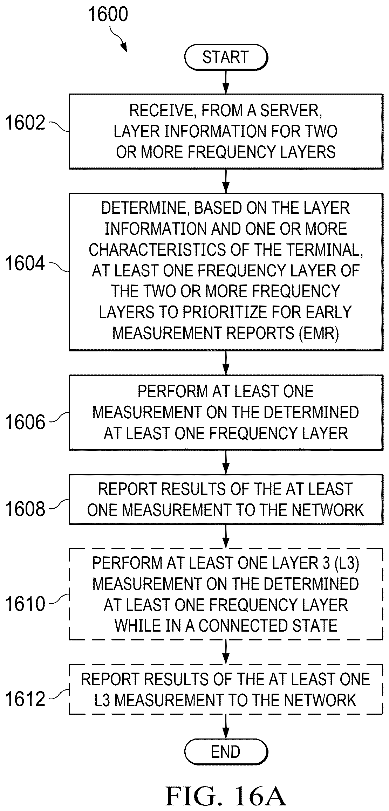

Figures 16A-16B are flowcharts detailing methods of using crowdsourced frequency layer information to autonomously determine EMR frequency layers for a UE to measure, according to some aspects. Turning first to Figure 16A, a method 1600 may begin at block 1602 by receiving, from a server (e.g., a server hosting the aforementioned crowdsourced frequency layer information), layer information for two or more frequency layers. Next, at block 1604, the method 1600 may determine, based on the layer information and one or more characteristics of the terminal, at least one frequency layer of the two or more frequency layers to prioritize for EMR. Next, at block 1606, the method 1600 may perform at least one measurement on the determined at least one frequency layer. Finally, block 1608, the method 1600 may report results of the at least one measurement to the network.

According to some embodiments, the method 1600 may be further extended to optionally, at block 1610, perform at least one Layer 3 (L3) measurement on the determined at least one frequency layer while the UE is in a Connected state and then, at block 1612, report results of the at least one L3 measurement to the network.

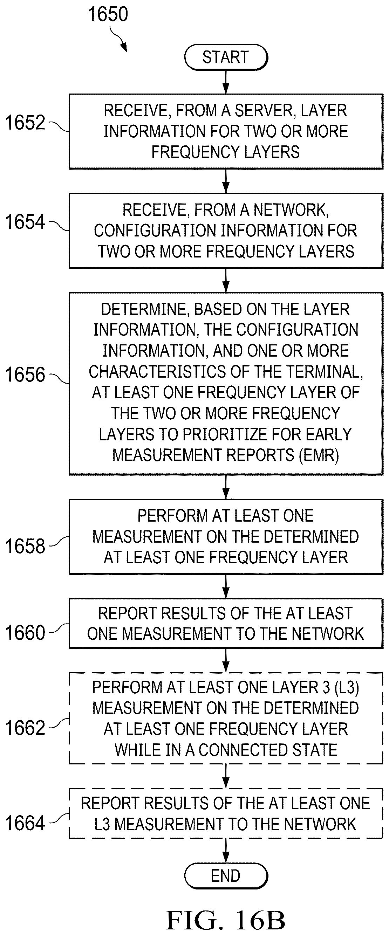

Turning now to Figure 16B, a method 1650 may begin at block 1652 by receiving, from a server (e.g., a server hosting the aforementioned crowdsourced frequency layer information), layer information for two or more frequency layers. Next, at block 1654, the method 1650 may receive, from a network, configuration information for two or more frequency layers (similar to the process described above in Figure 15). Next, at block 1656, the method 1650 may determine, based on the layer information, the configuration information, and one or more characteristics of the terminal, at least one frequency layer of the two or more frequency layers to prioritize for EMR. Next, at block 1658, the method 1650 may perform at least one measurement on the determined at least one frequency layer. Finally, block 1660, the method 1650 may report results of the at least one measurement to the network.

According to some embodiments, the method 1650 may be further extended to optionally, at block 1662, perform at least one Layer 3 (L3) measurement on the determined at least one frequency layer while the UE is in a Connected state and then, at block 1664, report results of the at least one L3 measurement to the network.

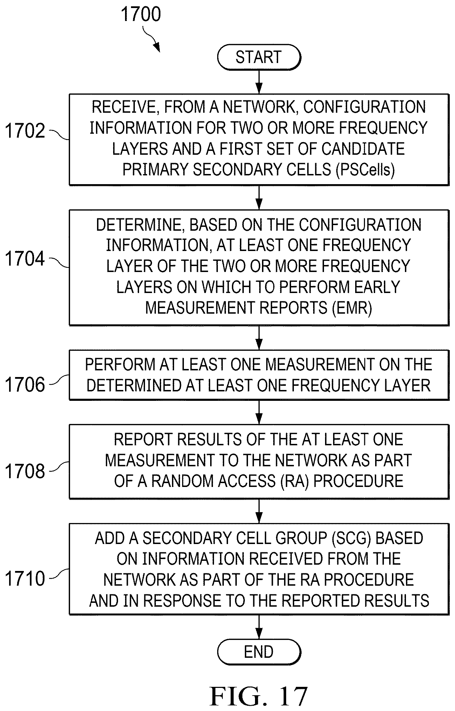

Figure 17 is a flowchart 1700 detailing a method of a network using service-specific frequency layer configuration information and a list of potential PSCells to configure for EMR measurements to a UE, according to some aspects. First, at block 1702, a UE practicing the method of 1700 may receive, from a network, configuration information for two or more frequency layers and a first set of candidate Primary Secondary Cells (PSCells). Next, at block 1704, the method may determine, based on the configuration information, at least one frequency layer of the two or more frequency layers on which to perform EMR. Next, at block 1706, the method may perform at least one measurement on the determined at least one frequency layer. Next, at block 1708, the method may report results of the at least one measurement to the network as part of a Random Access (RA) procedure. Finally, at block 1710, the method may add a SCG based on information received from the network as part of the RA procedure and in response to the reported results.

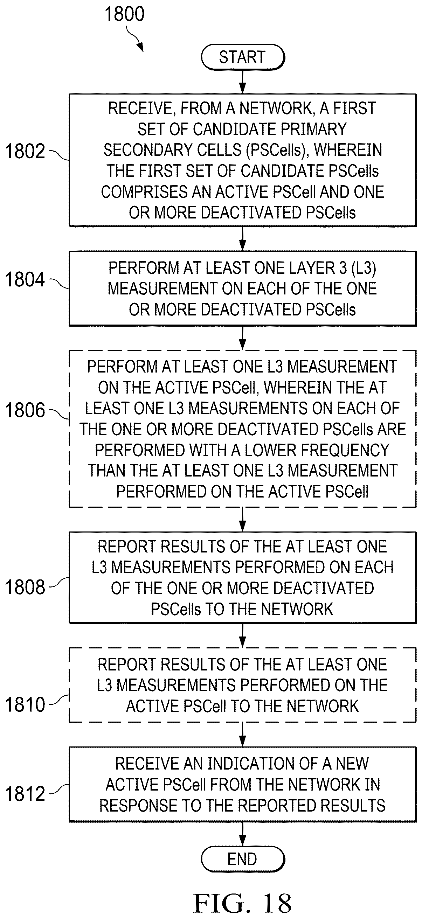

Figure 18 is a flowchart 1800 detailing a method of a UE receiving a set of PSCells from a network including an active PSCell and one or more deactivated PSCells, according to some aspects. First, at block 1802, a UE practicing the method of 1800 may receive, from a network, a first set of candidate PSCells, wherein the first set of candidate PSCells comprises an active PSCell and one or more deactivated PSCells. Next, at block 1804, the method may perform at least one L3 measurement on each of the one or more deactivated PSCells. Next, at block 1806, the method may optionally perform at least one L3 measurement on the active PSCell, wherein the at least one L3 measurements on each of the one or more deactivated PSCells are performed with a lower frequency than the at least one L3 measurement performed on the active PSCell.

Next, at block 1808, the method may report results of the at least one L3 measurements performed on each of the one or more deactivated PSCells to the network. Next, at block 1810, the method may optionally report results of the at least one L3 measurements performed on the active PSCell to the network. Finally, at block 1812, the method may receive an indication of a new active PSCell from the network in response to the reported results.

### Additional Comments

The use of the connective term "and/or" is meant to represent all possible alternatives of the conjunction "and" and the conjunction "or." For example, the sentence "configuration of A and/or B" includes the meaning and of sentences "configuration of A and B" and "configuration of A or B."

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Aspects of the present disclosure may be realized in any of various forms. For example, some aspects may be realized as a computer-implemented method, a computer-readable memory medium, or a computer system. Other aspects may be realized using one or more custom-designed hardware devices such as ASICs. Still other aspects may be realized using one or more programmable hardware elements such as FPGAs.

In some aspects, a non-transitory computer-readable memory medium may be configured so that it stores program instructions and/or data, where the program instructions, if executed by a computer system, cause the computer system to perform a method (e.g., any of a method aspects described herein, or, any combination of the method aspects described herein, or any subset of any of the method aspects described herein, or any combination of such subsets).

In some aspects, a device *(e.g.,* a UE 106, a BS 102) may be configured to include a processor (or a set of processors) and a memory medium, where the memory medium stores program instructions, where the processor is configured to read and execute the program instructions from the memory medium, where the program instructions are executable to implement any of the various method aspects described herein (or, any combination of the method aspects described herein, or, any subset of any of the method aspects described herein, or, any combination of such subsets). The device may be realized in any of various forms.

Although the aspects above have been described in considerable detail, numerous variations and modifications will become apparent to those skilled in the art once the above disclosure is fully appreciated. It is intended that the following claims be interpreted to embrace all such variations and modifications.

### NUMBERED STATEMENTS OF INVENTION

1. A terminal comprising:
   a receiver configured to receive, from a network, configuration information for two or more frequency layers; and
   a processor configured to:
      determine, based on the configuration information, at least one frequency layer of the two or more frequency layers to prioritize for Early Measurement Reports (EMR);
      perform at least one measurement on the determined at least one frequency layer; and
      report results of the at least one measurement to the network.
2. The terminal of statement 1, wherein the terminal is in an Idle state when the at least one measurement is performed.
3. The terminal of statement 1, wherein the terminal is in a Connected state when the results are reported to the network.
4. The terminal of statement 1, wherein the configuration information for the two or more frequency layers comprises information specifying one or more of: services performed by a given frequency layer; intended use cases for a given frequency layer; radio frequency (RF) conditions for a given frequency layer; or latency service levels for a given frequency layer.
5. The terminal of statement 1, wherein the configuration information for the two or more frequency layers comprises an identifier selected from a predetermined enumerated list of service type identifiers.
6. The terminal of statement 1, wherein the configuration information for the two or more frequency layers is received in one of: an RRC CONNECTION RELEASE message; or a System Information Block (SIB) message.
7. The terminal of statement 1, wherein the determination of the at least one frequency layer of the two or more frequency layers to prioritize for EMR is further based, at least in part on: a current location of the terminal; a current mobility state of the terminal; current network traffic levels; or current radio frequency (RF) conditions.
8. The terminal of statement 1, wherein the results are reported to the network in response to the terminal receiving a request from the network.
9. The terminal of statement 1, wherein the results are reported to the network in response to the terminal receiving an uplink (UL) grant from the network, and wherein the results are reported to the network via the received UL grant.
10. The terminal of statement 9, wherein the terminal receives the UL grant from the network in response to sending a scheduling request (SR) to the network.
11. The terminal of statement 9, wherein the UL grant comprises at least one of: a Configured Grant (CG)-based UL grant; or a SR-based UL grant.
12. A terminal comprising:
   a receiver configured to receive, from a server, layer information for two or more frequency layers; and
   a processor configured to:
      determine, based on the layer information and one or more characteristics of the terminal, at least one frequency layer of the two or more frequency layers to prioritize for Early Measurement Reports (EMR);
      perform at least one measurement on the determined at least one frequency layer; and
      report results of the at least one measurement to a network.
13. The terminal of statement 12, wherein the terminal is in an Idle state when the at least one measurement is performed.
14. The terminal of statement 12, wherein the receiver is further configured to receive, from the network, configuration information for the two or more frequency layers, and wherein the processor is further configured to determine the at least one frequency layer of the two or more frequency layers to prioritize for EMR based further on the received configuration information.
15. The terminal of statement 14, wherein the configuration information for the two or more frequency layers comprises information specifying one or more of: services performed by a given frequency layer; intended use cases for a given frequency layer; radio frequency (RF) conditions for a given frequency layer; or latency service levels for a given frequency layer.
16. The terminal of statement 12, wherein the one or more characteristics of the terminal comprise one or more of: a current location of the terminal; a current mobility state of the terminal; current network traffic levels; or current radio frequency (RF) conditions.
17. The terminal of statement 12, wherein the results are reported to the network in response to the terminal receiving a request from the network.
18. The terminal of statement 12, wherein the results are reported to the network in response to the terminal receiving an uplink (UL) grant from the network, and wherein the results are reported to the network via the received UL grant.
19. The terminal of statement 18, wherein the terminal receives the UL grant from the network in response to sending a scheduling request (SR) to the network.
20. The terminal of statement 18, wherein the UL grant comprises at least one of: a Configured Grant (CG)-based UL grant; or a SR-based UL grant.
21. The terminal of statement 18, wherein the terminal is further configured to:
   perform at least one Layer 3 (L3) measurement on the determined at least one frequency layer while in a Connected state; and
   report results of the at least one L3 measurement to the network.
22. A terminal comprising:
   a receiver configured to receive, from a network, configuration information for two or more frequency layers and a first set of candidate Primary Secondary Cells (PSCells); and
   a processor configured to:
      determine, based on the configuration information, at least one frequency layer of the two or more frequency layers on which to perform Early Measurement Reports (EMR);
      perform at least one measurement on the determined at least one frequency layer;
      report results of the at least one measurement to the network as part of a Random Access (RA) procedure; and
      add a secondary cell group (SCG) based on information received from the network as part of the RA procedure and in response to the reported results.
23. The terminal of statement 22, wherein the first set of candidate PSCells comprises: one or more New Radio (NR) PSCells; and one or more Long Term Evolution (LTE) PSCells.
24. The terminal of statement 22, wherein reporting the results of the at least one measurement to the network as part of a RA procedure further comprises reporting an indication that the terminal has a need for expedited PSCell addition.
25. The terminal of statement 24, wherein reporting the results of the at least one measurement to the network as part of a RA procedure occurs prior to the terminal establishing an Access Stratum (AS) security context with the network.
26. The terminal of statement 22, wherein each PSCell in the first set of candidate PSCells is a deactivated PSCell.
27. The terminal of statement 26, wherein the processor is further configured to:
   establish an Access Stratum (AS) security context with the network; and
   automatically activate a first PSCell listed in the first set of candidate PSCells.
28. The terminal of statement 26, wherein the processor is further configured to:
   establish an Access Stratum (AS) security context with the network,
   wherein a Security Mode Command (SMC) received from the network indicates an identity of a PSCell in the first set of candidate PSCells to activate.
29. The terminal of statement 26, wherein the processor is further configured to:
   establish an Access Stratum (AS) security context with the network,
   wherein a MAC CE message received inline with a Security Mode Command (SMC) from the network indicates an identity of a PSCell in the first set of candidate PSCells to activate.
30. The terminal of statement 26, wherein the processor is further configured to:
   establish an Access Stratum (AS) security context with the network,
   wherein a MAC CE message received subsequently to the receipt of a Security Mode Command (SMC) from the network indicates an identity of a PSCell in the first set of candidate PSCells to activate.
31. A terminal comprising:
   a receiver configured to receive, from a network, a first set of candidate Primary Secondary Cells (PSCells), wherein the first set of candidate PSCells comprises an active PSCell and one or more deactivated PSCells; and
   a processor configured to:
      perform at least one Layer 3 (L3) measurement on each of the one or more deactivated PSCells;
      report results of the at least one L3 measurements performed on each of the one or more deactivated PSCells to the network; and
      receive an indication of a new active PSCell from the network in response to the reported results.
32. The terminal of statement 31, wherein the first set of candidate PSCells is received as part of a Radio Resource Control (RRC) Reconfiguration message.
33. The terminal of statement 31, wherein the indication of the new active PSCell is received via one of: a Medium Access Control (MAC) Control Element (CE) message; or a Downlink Control Information (DCI) format message.
34. The terminal of statement 31, wherein an identity of the active PSCell of the first set of candidate PSCells is indicated via a MAC CE message.
35. The terminal of statement 31, wherein the processor is further configured to: change the terminal's current PSCell to be the indicated new active PSCell.
36. The terminal of statement 35, wherein changing the terminal's current PSCell to be the indicated new active PSCell further comprises the processor causing the terminal to:
   perform a Random Access Channel (RACH) procedure with the network; and
   choose a beam for use with the new active PSCell based, at least in part, on the RACH procedure.
37. The terminal of statement 35, wherein changing the terminal's current PSCell to be the indicated new active PSCell further comprises the terminal:
   receiving a MAC CE message indicating an active Transmission Configuration Indicator (TCI) state for the new active PSCell; and
   transmitting a valid Channel State Information (CSI) report for the new active PSCell to the network.
38. The terminal of statement 31, wherein the processor is further configured to:
   perform at least one L3 measurement on the active PSCell.
39. The terminal of statement 38, wherein the at least one L3 measurements on each of the one or more deactivated PSCells are performed with a lower frequency than the at least one L3 measurement performed on the active PSCell.
40. The terminal of statement 31, wherein the processor is further configured to:
   report results of the at least one L3 measurements performed on the active PSCell to the network.
41. A method as described above with reference to the actions or combination of actions performed by any of the terminals of statements 1-40.
42. A non-volatile computer-readable medium that stores instructions that, when executed, cause the performance of any action or combination of actions performed by any of the terminals of statements 1-40.

## Claims

1. A method of a baseband processor for a terminal, the method comprising:
receiving, from a server, layer information for two or more frequency layers;
determining, based on the layer information and one or more characteristics of the terminal, at least one frequency layer of the two or more frequency layers to prioritize for Early Measurement Reports, EMR;
perform at least one measurement on the determined at least one frequency layer; and
report results of the at least one measurement to a network.

2. The method of claim 1, wherein the terminal is in an Idle state when the at least one measurement is performed.

3. The method of claim 2 or claim 3, further comprising receiving, from the network, configuration information for the two or more frequency layers, and further comprising determining the at least one frequency layer of the two or more frequency layers to prioritize for EMR based further on the received configuration information.

4. The method of claim 4, wherein the configuration information for the two or more frequency layers comprises information specifying one or more of: services performed by a given frequency layer; intended use cases for a given frequency layer; radio frequency, RF, conditions for a given frequency layer; or latency service levels for a given frequency layer.

5. The method of any of claims 2 to 4, wherein the one or more characteristics of the terminal comprise one or more of: a current location of the terminal; a current mobility state of the terminal; current network traffic levels; or current radio frequency, RF, conditions.

6. The method of any of claims 2 to 5, wherein the results are reported to the network in response to the baseband processor receiving a request from the network.

7. The method of any of claims 2 to 6, wherein the results are reported to the network in response to the baseband processor receiving an uplink, UL, grant from the network, and wherein the results are reported to the network via the received UL grant.

8. The method of claim 7, wherein the terminal receives the UL grant from the network in response to sending a scheduling request, SR, to the network.

9. The method of claim 7 or 8, wherein the UL grant comprises at least one of: a Configured Grant, CG,-based UL grant; or a SR-based UL grant.

10. The method of any of claims 7 to 9, further comprising:
performing at least one Layer 3, L3, measurement on the determined at least one frequency layer while in a Connected state; and
reporting results of the at least one L3 measurement to the network.

11. A baseband processor for a terminal, the baseband processor configured to:
receive, from a server, layer information for two or more frequency layers;
determine, based on the layer information and one or more characteristics of the terminal, at least one frequency layer of the two or more frequency layers to prioritize for Early Measurement Reports, EMR,;
perform at least one measurement on the determined at least one frequency layer; and
report results of the at least one measurement to a network.

12. The baseband processor according to claim 11, further configured to perform the method according to any of claims 2 to 10.

13. A terminal comprising:
the baseband processor according to any of claims 11 or 12; and
a receiver configured to receive the layer information for the two or more frequency layers.

14. The terminal according to claim 13, wherein the receiver is further configured to receive, from the network, configuration information for the two or more frequency layers, and wherein the processor is further configured to determine the at least one frequency layer of the two or more frequency layers to prioritize for EMR based further on the received configuration information.

15. A computer readable storage medium storing instructions thereon, which when executed by a baseband processor of a terminal, cause the terminal to execute the method of any of claims 1 to 10.
